(19) Europäisches Patentamt
European Patent Office
Office européen des brevets

(11) EP 2 598 612 B1

(12) **FASCICULE DE BREVET EUROPEEN**

(45) Date de publication et mention de la délivrance du brevet:
**15.10.2014 Bulletin 2014/42**

(21) Numéro de dépôt: **11743262.5**

(22) Date de dépôt: **24.06.2011**

(51) Int Cl.:
***C10G 45/08*** *(2006.01)* ***B01J 23/652*** *(2006.01)*
***B01J 23/85*** *(2006.01)* ***B01J 37/08*** *(2006.01)*

(86) Numéro de dépôt international:
**PCT/FR2011/000368**

(87) Numéro de publication internationale:
**WO 2012/022850 (23.02.2012 Gazette 2012/08)**

(54) **PROCEDE D'HYDROTRAITEMENT D'UNE COUPE HYDROCARBONEE DE POINT D'EBULLITION SUPERIEUR A 250 °C EN PRESENCE D'UN CATALYSEUR SULFURE PREPARE AU MOYEN D'UN OLIGOSACCHARIDE CYCLIQUE**

VERFAHREN ZUR WASSERSTOFFBEHANDLUNG EINER KOHLENWASSERSTOFFFRAKTION MIT SIEDEPUNKT ÜBER250°C IN GEGENWART EINES SULFIDKATALYSATORS HERSGESTELLT UNTER VERWENDUNG MINDESTENS EINER CYCLISCHE OLIGOSACCHARIDE

METHOD FOR THE HYDROTREATING OF A HYDROCARBON FRACTION HAVING A BOILING POINT OF HIGHER THAN 250°C IN THE PRESENCE OF A SULFIDE CATALYST PREPARED USING AT LEAST ONE CYCLIC OLIGOSACCHARIDE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2010 FR 1003192**

(43) Date de publication de la demande:
**05.06.2013 Bulletin 2013/23**

(73) Titulaire: **IFP Energies nouvelles**
**92852 Rueil-Malmaison Cedex (FR)**

(72) Inventeurs:
- **DIEHL, Fabrice**
  **F-69003 Lyon (FR)**
- **DEVERS, Elodie**
  **F-69007 Lyon (FR)**
- **MARCHAND, Karin**
  **F-69008 Lyon (FR)**
- **GUICHARD, Bertrand**
  **F-38140 Izeaux (FR)**

(56) Documents cités:
**WO-A2-2007/070394** **US-A- 4 426 292**
**US-A1- 2008 269 533** **US-A1- 2009 074 641**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 598 612 B1

## Description

Domaine de l'invention

La présente invention se rapporte à une nouvelle méthode de préparation d'un catalyseur en vue de son utilisation dans les procédés d'hydrotraitement de charges hydrocarbonées contenant des hétéroatomes tels que le soufre, l'azote ou les métaux et ayant un point d'ébullition supérieur ou égal à 250°C.

Art antérieur

Habituellement, un catalyseur d'hydrotraitement de coupes hydrocarbonées a pour but d'éliminer les composés indésirables, notamment les composés soufrés et les composés azotés, et éventuellement les métaux contenus dans celles-ci afin d'obtenir par exemple un produit pétrolier répondant aux spécifications requises (teneur en soufre, teneur en aromatiques etc..) pour une application donnée (carburant automobile, essence ou gazole, fioul domestique, carburéacteur). Il peut également s'agir de prétraiter lesdites coupes hydrocarbonées afin d'en éliminer les impuretés avant de leur faire subir différents procédés de transformation pour en modifier les propriétés physico-chimiques, tels que par exemple les procédés de reformage, d'hydrocraquage de distillats sous vide, de craquage catalytique, d'hydroconversion et d'hydrotraitement de résidus atmosphériques ou sous-vide.

Le durcissement des normes de pollution automobile dans la communauté européenne (Journal Officiel de l'Union européenne, L76, 22 mars 2003, Directive 2003/70/CE, pages L76/10-L76/19) a contraint les raffineurs à réduire très fortement la teneur en soufre dans les carburants diesel et les essences (au maximum 10 parties par million poids (ppm) de soufre au 1er janvier 2009, contre 50 ppm au 1er janvier 2005). Par ailleurs, les raffineurs se trouvent contraints d'utiliser des charges de plus en plus réfractaires aux procédés d'hydrotraitement, d'une part parce que les bruts sont de plus en plus lourds et contiennent par conséquent de plus en plus d'impuretés et, d'autre part, du fait de l'augmentation des procédés de conversion dans les raffineries. En effet, ceux-ci génèrent des coupes plus difficiles à hydrotraiter que les coupes directement issues de la distillation atmosphérique. A titre d'exemple, on peut mentionner la coupe gazole issue du craquage catalytique, aussi nommée LCO (Light Cycle Oil) en référence à sa teneur élevée en composées aromatiques. Ces coupes plus réfractaires sont par exemple co-traitées avec la coupe gazole issue de la distillation atmosphérique ; elles nécessitent des catalyseurs possédant des fonctions hydrodésulfurantes et hydrogénantes fortement améliorées par rapport aux catalyseurs traditionnels de façon à diminuer la teneur en aromatiques pour obtenir une densité et un indice de cétane en accord avec les spécifications.

La composition et l'utilisation des catalyseurs d'hydrotraitement sont particulièrement bien décrits dans l'article de B. S Clausen, H. T. Topsøe, et F.E. Massoth, issu de l'ouvrage Catalysis Science and Technology, volume 11 (1996), Springer-Verlag. La phase active des catalyseurs d'hydrotraitement est constituée d'une phase sulfure "mixte" constituée par des feuillets de disulfure de molybdène (respectivement de tungstène) décorés par des atomes de promoteur (cobalt ou nickel, le plus souvent) en périphérie. Cette phase a été identifiée par spectroscopie Mössbauer et des corrélation activité-teneur en phase mixte CoMoS ont pu être établies comme le montre l'article de H. Topsøe, B.S. Clausen, Applied Catalysis 25 (1986) 273. La synthèse des catalyseurs d'hydrotraitement est une suite d'étapes unitaires conduisant chacune à des produits secondaires, souvent non désirés qui diminuent le rendement en phase "mixte" CoMoS (respectivement NiMoS, NiWS). Ainsi, lors des étapes d'imprégnation et de mûrissement, il a été montré que l'adsorption des polyoxométallates à la surface de l'alumine s'accompagne d'un processus de dissolution-reprécipitation menant à la formation de coprécipités de type hydrotalcite, d'aluminate de cobalt $CoAl_2O_4$ et d'une phase de surface de type molybdate d'aluminium $Al_2(MoO_4)_3$ comme le montre l'article de X. Carrier, J.F. Lambert, M. Che paru dans le J.A.C.S. en 1997(JACS 119 (42) page 10137). L'utilisation de solutions de métaux du groupe VIB, VIII et de composés phosphorés sous forme d'hétéropolyanions de Keggin, Strandberg ou d'Anderson de plus haute solubilité a permis de diminuer l'occurrence de ces produits secondaires liés à l'interaction du support avec les précurseurs de la phase active.

Une des solutions pour améliorer l'activité des catalyseurs d'hydrotraitement est d'augmenter leur teneur en phase active. Or, lors de la calcination des catalyseurs, des phénomènes de frittage peuvent survenir et conduire à l'apparition de phases cristallisées indésirables. Ils sont liés à la densité surfacique de phase active et à la température de calcination. Les analyses DRX permettent de faire un dosage semi quantitatif de la quantité de $CoMoO_4$ cristallisé détectée (rapport des aires des raies à 26° entre l'échantillon analysé et un échantillon de référence dont la valeur est prise comme référence et égale à 100 %). Différents auteurs ont montré qu'après sulfuration, $CoMoO_4$ conduisait à un mélange de phases essentiellement constitué de $CoMo_2S_4$, $Co_2Mo_3O_8$ et $Co_nS_{n-1}$ qui, selon G. Hagenbach, P. Courty and B. Delmon, dans Journal of Catalysis. 23 (1971) 295, auraient une très faible activité. L'absence de $CoMoO_4$ est donc un point positif important, puisque cette phase ne contribue pas de manière significative à l'activité catalytique et l'homme de l'art est ainsi incité à veiller à une bonne dispersion de la phase active.

L'ajout d'un composé organique sur les catalyseurs d'hydrotraitement pour améliorer leur activité est maintenant bien connue de l'homme du métier. De nombreux brevets et demandes de brevets décrivent l'utilisation de différentes

familles de composés organiques, tels que les mono,-di-ou polyalcools éventuellement éthérifiés (WO96/41848, WO01/76741, US 4.012.340, US 3.954.673). Des catalyseurs modifiés avec des monoesters en C2-C14 sont décrits dans les demandes de brevet EP 466.568 et EP 1.046.424.

On peut également citer la demande de brevet EP 0.601.722A1 qui propose la préparation de catalyseurs d'hydrotraitement séchés en procédant à l'imprégnation de mono-, di- ou polysaccharides non cycliques comme le glucose, le fructose, le maltose, le lactose ou le sucrose. On peut encore citer la demande de brevet WO2007/070394 qui divulgue un procédé de préparation de catalyseurs d'hydrotraitement de charges carbonées utilisant des sucres, dont le lactose (de formule $C_{10}H_{22}O_{11}$ qui est un diholoside non cyclique), comme agent complexant permettant l'amélioration de l'activité desdits catalyseurs en hydrotraitement, hydrodésulfuration et hydrodéazotation. La préparation de ces catalyseurs d'hydrotraitement selon l'art antérieur se termine par un traitement thermique effectué à une température suffisamment basse pour ne pas décomposer les composés organiques, utilisés au cours de la préparation, avant la mise en oeuvre desdits catalyseurs dans un procédé d'hydrotraitement.

Cependant, ces modifications apportées par l'imprégnation de composés organiques au cours de la préparation de catalyseurs d'hydrotraitement ne permettent pas toujours d'accroître suffisamment les performances des catalyseurs pour faire face aux spécifications concernant notamment les teneurs en soufre des carburants qui ne cessent de devenir de plus en plus contraignantes pour les raffineurs. Aussi, toute autre méthodologie de synthèse conduisant à des interactions innovantes entre un support oxyde et des précurseurs des phases actives sont extrêmement intéressantes.

<u>Résumé et intérêt de l'invention</u>

La présente invention a pour objet un procédé de préparation d'un catalyseur comprenant au moins un métal du groupe VIII, au moins un métal du groupe VIB et au moins un support formé d'au moins un oxyde, ledit procédé comprenant successivement au moins :

- i) au moins l'une des étapes choisies parmi :
  - i1) au moins une étape de mise en contact d'au moins un précatalyseur comprenant au moins ledit métal du groupe VIII, au moins ledit métal du groupe VIB et au moins ledit support avec au moins un composé organique formé d'au moins un oligosaccharide cyclique composé d'au moins 6 sous-unités glucopyranose liées en $\alpha$-(1,4),
  - i2) au moins une étape de mise en contact d'au moins dudit support avec au moins une solution contenant au moins un précurseur d'au moins dudit métal du groupe VIII, au moins un précurseur d'au moins dudit métal du groupe VIB et au moins un composé organique formé d'au moins un oligosaccharide cyclique composé d'au moins 6 sous-unités glucopyranose liées en $\alpha$-(1,4), et
  - i3) au moins une première étape de mise en contact d'au moins dudit support avec au moins un composé organique formé d'au moins un oligosaccharide cyclique composé d'au moins 6 sous-unités glucopyranose liées en $\alpha$-(1,4) suivie d'au moins une deuxième étape de mise en contact du solide issu de ladite première étape avec au moins un précurseur d'au moins dudit métal du groupe VIII et au moins un précurseur d'au moins dudit métal du groupe VIB ;
- ii) au moins une étape de séchage, et
- iii) au moins une étape de traitement thermique pour décomposer ledit composé organique.

Le procédé de préparation selon l'invention comprend avantageusement au moins une étape de sulfuration iv) effectuée après la mise en oeuvre de ladite étape iii).

Le catalyseur sous forme sulfurée, préparé selon le procédé de l'invention, est avantageusement mis en oeuvre dans un procédé d'hydrotraitement d'une charge hydrocarbonée ayant un point d'ébullition supérieur ou égal à 250°C et comprenant au moins un hétéroatome. En particulier, ledit catalyseur sous forme sulfurée est mis en oeuvre dans un procédé d'hydrodésulfuration d'une coupe gazole et dans un procédé d'hydrotraitement d'une charge hydrocarbonée lourde ayant un point d'ébullition supérieur ou égal à 370°C.

De manière surprenante, il a été découvert qu'un catalyseur, préparé selon le procédé de l'invention, conduit à des performances catalytiques améliorées, notamment en terme d'activité, lorsqu'il est utilisé pour l'hydrotraitement de charges hydrocarbonées ayant un point d'ébullition supérieur ou égal à 250°C et comprenant au moins un hétéroatome. En particulier, il présente une activité amélioré en hydrodésulfuration d'une charge gazole et en hydrotraitement de charges lourdes ayant un point d'ébullition supérieur ou égal à 370°C.

<u>Description de l'invention</u>

La présente invention a pour objet un procédé de préparation d'un catalyseur comprenant au moins un métal

du groupe VIII, au moins un métal du groupe VIB et au moins un support formé d'au moins un oxyde, ledit procédé comprenant successivement au moins :

i) au moins l'une des étapes choisies parmi :

i1) au moins une étape de mise en contact d'au moins un précatalyseur comprenant au moins ledit métal du groupe VIII, au moins ledit métal du groupe VIB et au moins ledit support avec au moins un composé organique formé d'au moins un oligosaccharide cyclique composé d'au moins 6 sous-unités glucopyranose liées en $\alpha$-(1,4),
i2) au moins une étape de mise en contact d'au moins dudit support avec au moins une solution contenant au moins un précurseur d'au moins dudit métal du groupe VIII, au moins un précurseur d'au moins dudit métal du groupe VIB et au moins un composé organique formé d'au moins un oligosaccharide cyclique composé d'au moins 6 sous-unités glucopyranose liées en $\alpha$-(1,4), et
i3) au moins une première étape de mise en contact d'au moins dudit support avec au moins un composé organique formé d'au moins un oligosaccharide cyclique composé d'au moins 6 sous-unités glucopyranose liées en $\alpha$-(1,4) suivie d'au moins une deuxième étape de mise en contact du solide issu de ladite première étape avec au moins un précurseur d'au moins dudit métal du groupe VIII et au moins un précurseur d'au moins dudit métal du groupe VIB ;

ii) au moins une étape de séchage, et
iii) au moins une étape de traitement thermique pour décomposer ledit composé organique.

La phase active du catalyseur préparé selon le procédé de l'invention comprend au moins un métal du groupe VIII de la classification périodique des éléments et au moins un métal du groupe VIB de la classification périodique des éléments, le(s)dit(s) métal(ux) du groupe VIII et le(s)dit(s) métal(ux) du groupe VIB assurant la fonction hydro-déshydrogénante dudit catalyseur. De manière préférée, ledit catalyseur comprend du phosphore. De manière encore plus préférée, ledit catalyseur, dont la composition comprend ou non du phosphore, comprend un dopant choisi parmi le bore et le fluor, pris seul ou en mélange. Le dopant, bien que ne présentant en lui-même aucun caractère catalytique, permet d'accroître l'activité catalytique des métaux des groupes VIB et VIII. Le phosphore et le dopant préférentiellement compris dans la composition dudit catalyseur entrent dans la phase active du catalyseur préparé selon le procédé de l'invention.

De manière générale, la teneur totale en éléments hydro-déshydrogénants, c'est-à-dire en métal(ux) du groupe VIII et en métal(ux) du groupe VIB, est supérieure à 6 % poids oxydes de métaux des groupes VIB et VIII par rapport au poids total du catalyseur, de préférence elle est comprise entre 10 et 50 % poids d'oxydes de métaux des groupes VIB et VIII par rapport au poids total du catalyseur. La teneur en métal(ux) du groupe VIB est comprise entre 4 et 40% poids d'oxyde(s) de métal(ux) du groupe VIB par rapport au poids total du catalyseur, de préférence entre 8 et 35% poids et de manière plus préférée entre 10 et 30% poids d'oxyde(s) de métal(ux) du groupe VIB par rapport au poids total du catalyseur. La teneur en métal(ux) du groupe VIII est comprise entre 1 et 10% poids d'oxyde(s) de métal(ux) du groupe VIII par rapport au poids total du catalyseur, de préférence entre 1,5 et 9% poids et de manière plus préférée entre 2 et 8% poids d'oxyde(s) de métal(ux) du groupe VIII par rapport au poids total du catalyseur. Les pourcentages poids en métaux des groupes VIII et VIB indiqués ci-dessus sont exprimés par rapport au poids total du catalyseur issu de ladite étape iii) du procédé de préparation selon l'invention. Ledit catalyseur se trouve alors sous forme oxyde.

Le métal du groupe VIB présent dans la phase active du catalyseur préparé selon le procédé de l'invention est préférentiellement choisi parmi le molybdène, le tungstène et le mélange de ces deux éléments, et très préférentiellement, le métal du groupe VIB est le molybdène. Le métal du groupe VIII présent dans la phase active du catalyseur préparé selon le procédé de l'invention est préférentiellement choisi parmi les métaux non nobles du groupe VIII de la classification périodique des éléments. De manière préférée, ledit métal du groupe VIII est choisi parmi le cobalt, le nickel et le mélange de ces deux éléments.

Conformément à l'invention, la fonction hydro-déshydrogénante est choisie dans le groupe formé par la combinaison des éléments cobalt-molybdène, nickel-molybdène, nickel-cobalt-molybdène, nickel-molybdène-tungstène et nickel-tungstène.

Le rapport molaire métal(ux) du groupe VIII sur métal(ux) du groupe VIB dans le catalyseur oxyde issu de ladite étape iii) est préférentiellement compris entre 0,1 et 0,8, très préférentiellement compris entre 0,2 et 0,6, et de manière encore plus préférée compris entre 0,3 et 0,5.

Lorsque le catalyseur contient du phosphore, la teneur en phosphore dans ledit catalyseur oxyde issu de ladite étape iii) est de préférence comprise entre 0,1 et 20 % poids de $P_2O_5$, de manière plus préférée entre 0,2 et 15 % poids de $P_2O_5$, de manière très préférée entre 0,3 et 10 % poids de $P_2O_5$. Le rapport molaire phosphore sur métal(ux) du groupe VIB dans le catalyseur oxyde issu de ladite étape iii) est supérieur ou égal à 0,05, de préférence supérieur ou égal à 0,1, de manière plus préférée compris entre 0,15 et 0,6, de manière encore plus préférée compris entre 0,15 et

0,5. Lorsque le catalyseur contient du bore en tant que dopant, la teneur en bore dans ledit catalyseur oxyde issu de ladite étape iii) est de préférence comprise entre 0,1 et 30 % poids d'oxyde de bore, de manière plus préférée entre 0,2 et 15 % poids d'oxyde de bore, de manière très préférée entre 0,2 et 10 % poids d'oxyde de bore.

Lorsque le catalyseur contient du fluor en tant que dopant, la teneur en fluor dans ledit catalyseur oxyde issu de ladite étape iii) est de préférence comprise entre 0,1 et 20 % poids de fluor, de manière plus préférée entre 0,2 et 15 % poids de fluor, de manière très préférée entre 0,2 et 10 % poids de fluor.

Le support du catalyseur préparé selon le procédé de l'invention est formé d'au moins un oxyde comprenant au moins 50% poids d'alumine. En particulier ledit support est choisi parmi les alumines de transition et les silices-alumines dont la teneur pondérale en silice dans ledit support est d'au plus 15% poids. Par alumine de transition, on entend par exemple une alumine phase alpha, une alumine phase delta, une alumine phase gamma ou un mélange d'alumine de ces différentes phases. Ledit support est avantageusement constitué soit d'une ou d'un mélange d'alumine de transition soit d'une silice-alumine dont la teneur pondérale en silice dans ledit support est d'au plus 15% poids. Ledit support est préférentiellement dépourvu de la présence de cristaux zéolithiques. Le volume poreux du support est généralement compris entre 0,4 et 1,5 $cm^3/g$, de préférence compris entre 0,5 et 1,2 $cm^3/g$. La surface spécifique du support est généralement comprise entre 100 et 400 $m^2/g$, de préférence entre 150 et 350 $m^2/g$. Ledit support poreux est mis en forme de telle sorte qu'il se présente avantageusement sous forme de billes, d'extrudés, de pastilles, ou d'agglomérats irréguliers et non sphériques dont la forme spécifique peut résulter d'une étape de concassage. De manière très avantageuse, ledit support se présente sous forme de billes ou d'extrudés. Ledit support est très avantageusement calciné à une température préférentiellement comprise entre 300 et 600°C après mise en forme. Selon un mode préféré, ledit support comprend en partie des métaux des groupes VIB et VIII et/ou en partie du phosphore et/ou au moins en partie un dopant.

Conformément à ladite étape i) du procédé de préparation selon l'invention, ledit catalyseur est préparé en présence d'au moins un composé organique formé d'au moins un oligosaccharide cyclique composé d'au moins 6 sous-unités glucopyranose liées en α-(1,4). Une représentation spatiale d'une sous-unité glucopyranose est donnée ci-dessous :

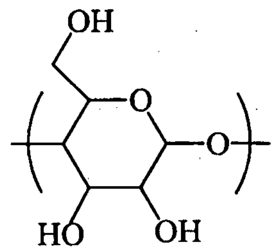

Ledit composé organique est préférentiellement choisi parmi les cyclodextrines, les cyclodextrines substituées, les cyclodextrines polymérisées et les mélanges de cyclodextrines. Les cyclodextrines sont une famille d'oligosaccharides cycliques composés de sous-unités glucopyranose liées en α-(1,4). Il s'agit de molécules-cages. Selon le procédé de l'invention, les cyclodextrines préférentiellement utilisées pour la mise en oeuvre de ladite étape i) du procédé de préparation selon l'invention, c'est-à-dire pour la mise en oeuvre d'au moins l'une des étapes choisies parmi i1), i2) et i3), sont l'α-cyclodextrine, la β-cyclodextrine et la γ-cyclodextrine respectivement composées de 6, 7 et 8 sous-unités glucopyranose liées en α-(1,4). Les représentations développées de l'α-cyclodextrine, de la β-cyclodextrine et de la γ-cyclodextrine sont données ci-dessous. On utilise préférentiellement pour la mise en oeuvre de ladite étape i) la β-cyclodextrine composée de 7 sous-unités glucopyranose liées en α-(1,4). Les cyclodextrines sont des composés commercialisés.

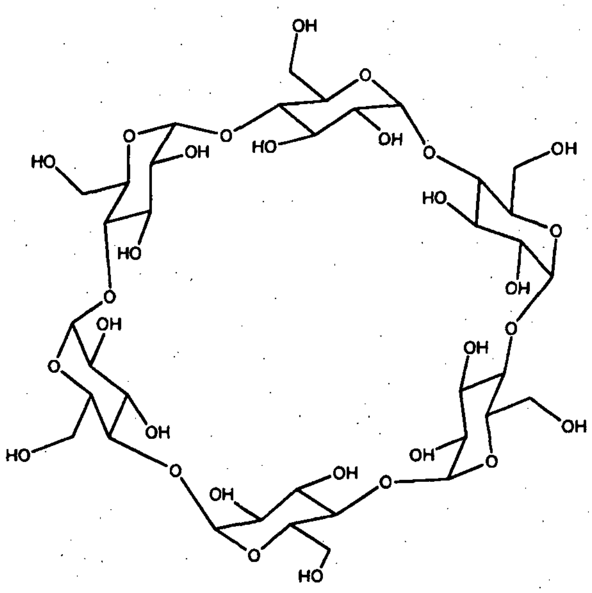

α-cyclodextrine

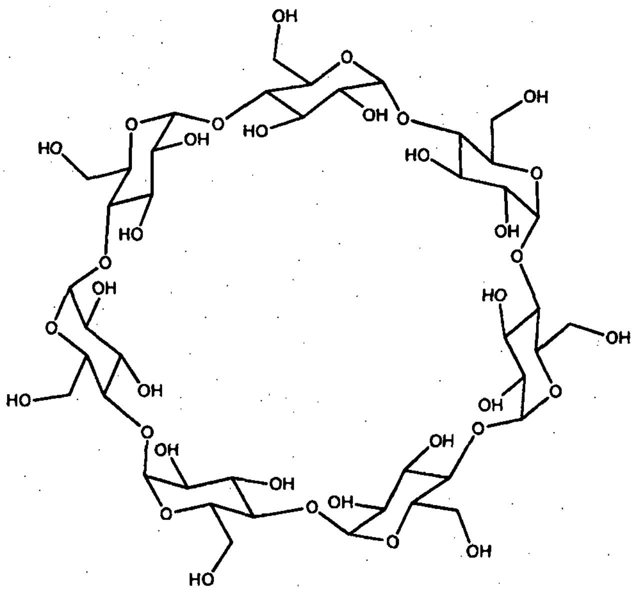

β-cyclodextrine

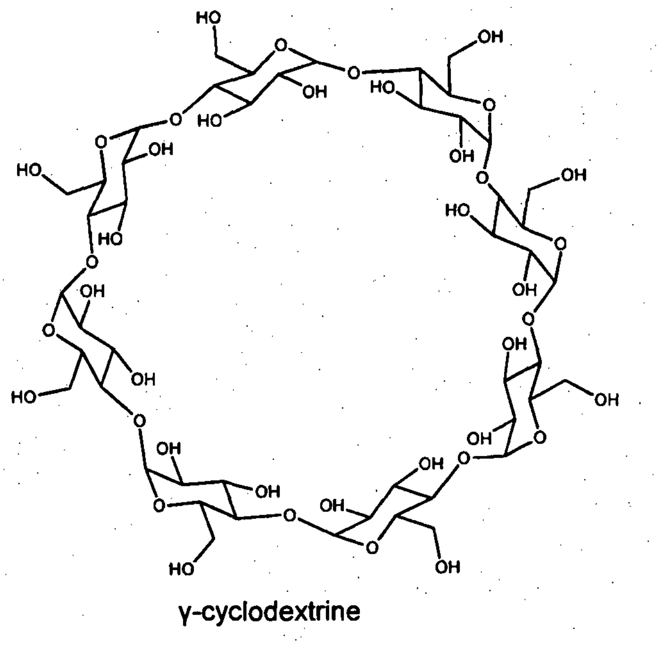

γ-cyclodextrine

Les cyclodextrines substituées avantageusement employées pour la mise en oeuvre de ladite étape i) du procédé de préparation selon l'invention, c'est-à-dire pour la mise en oeuvre d'au moins l'une des étapes choisies parmi i1), i2) et i3), sont constituées de 6, 7 ou 8 sous-unités glucopyranose liées en $\alpha$-(1,4), dont l'une au moins est mono- ou polysubstituée. Les substituants peuvent être fixés sur un ou plusieurs groupe(s) hydroxyle(s) présent(s) dans la molécule, à savoir sur les groupes hydroxyles directement liés au cycle d'une unité glucopyranose et/ou sur l'hydroxyle lié au groupement $CH_2$ lui-même lié au cycle d'une unité glucopyranose. De manière plus préférée, lesdites cyclodextrines substituées portent un ou plusieurs substituant(s), identique(s) ou différent(s), choisi(s) parmi les radicaux alkyles saturés ou non, fonctionnalisés ou non, et les fonctions esters, carbonyles, carboxyles, carboxylates, phosphates, éthers, polyéthers, urées, amide, amino, triazole, ammonium. Les cyclodextrines substituées préférées sont les cyclodextrines méthylées, éthylées, propylées, allylées (c'est-à-dire possédant une fonction ayant pour formule semi-développée $-CH_2-CH=CH_2$), succinylées (c'est-à-dire possédant une fonction ayant pour formule semi-développée $R-OCO-CH_2-CH_2COOH$), carboxylées, carboxyméthylées, acétylées, 2-hydroxypropylées et polyoxyéthylénées. Les groupements mono- ou polysubstituants de la cyclodextrine peuvent aussi être une molécule de monosaccharide ou disaccharide telle qu'une molécule de maltose, glucose, fructose ou saccharose. Les cyclodextrines substituées particulièrement avantageuses pour la mise en oeuvre de ladite étape i) du procédé selon l'invention, c'est-à-dire pour la mise en oeuvre d'au moins l'une des étapes choisies parmi i1), i2) et i3), sont l'hydroxypropyl bêta-cyclodextrine et les bêta-cyclodextrines méthylées.

Les cyclodextrines polymérisées avantageusement employées pour la mise en oeuvre de ladite étape i), c'est-à-dire pour la mise en oeuvre d'au moins l'une des étapes choisies parmi i1), i2) et i3), sont des polymères dont les monomères sont chacun constitués d'un oligosaccharide cyclique composé de 6, 7 ou 8 sous-unités glucopyranose liées en $\alpha$-(1,4), substituées ou non. Une cyclodextrine sous forme polymérisée, réticulée ou non, pouvant être avantageusement utilisée pour la mise en oeuvre de ladite étape i) est par exemple du type de celle obtenue par polymérisation de monomères de bêta-cyclodextrine avec de l'épichlorhydrine ou un polyacide.

Les mélanges de cyclodextrines avantageusement employés pour la mise en oeuvre de ladite étape i) du procédé de préparation du catalyseur selon l'invention mettent en oeuvre des cyclodextrines substituées ou non. Lesdits mélanges pourront, à titre d'exemple, contenir conjointement et dans des proportions variables, chacun des trois types de cyclodextrines (alpha, bêta et gamma).

L'introduction dudit composé organique, préférentiellement d'une cyclodextrine et très préférentiellement de la bêta-cyclodextrine, pour la mise en oeuvre de ladite étape i) du procédé selon l'invention est telle que le rapport molaire {(métaux des groupes (VIII + VIB) sous forme d'oxyde présent dans phase active du catalyseur obtenu à l'issue de ladite étape iii)/composé organique} est compris entre 10 et 300 et de préférence entre 25 et 180. Les métaux des groupes VIII et VIB pris en compte pour le calcul dudit rapport molaire sont les métaux introduits pour la mise en oeuvre de ladite étape i) du procédé de préparation selon l'invention et se trouvant sous la forme d'oxyde dans la phase active du catalyseur issu de ladite étape iii). Lesdits métaux du groupe VIII et VIB peuvent en conséquence se trouver sous la forme sulfure : ils seront sulfurés préalablement à la mise en oeuvre du procédé d'hydrotraitement décrit plus loin dans la présente description.

La mise en contact dudit composé organique avec ledit précatalyseur pour la mise en oeuvre de ladite étape i1) respectivement avec ledit support pour la mise en oeuvre de ladite étape i2) ou de ladite étape i3) est réalisée par imprégnation, notamment par imprégnation à sec ou imprégnation en excès, préférentiellement par imprégnation à sec. Ledit composé organique est préférentiellement imprégné sur ledit précatalyseur (étape i1) respectivement sur ledit support (étape i2 ou étape i3) après solubilisation en solution aqueuse. L'imprégnation dudit composé organique sur ledit précatalyseur (étape i1) respectivement sur ledit support (étape i2 ou étape i3) est suivie d'une étape de maturation, puis d'une étape de séchage préférentiellement réalisée à une température comprise entre 50 et 200°C, très préférentiellement comprise entre 65 et 180°C et de manière encore plus préférée entre 75 et 160°C. Ladite étape de séchage est éventuellement suivie d'une étape de calcination.

Conformément à ladite étape i) du procédé de préparation selon l'invention, le dépôt d'au moins dudit métal du groupe VIII et d'au moins dudit métal du groupe VIB sur ledit support (étape i1 ou étape i2) ou sur ledit solide comprenant ledit composé organique obtenu à l'issue de ladite première étape selon l'étape i3) peut être réalisé par toute méthode bien connue de l'Homme du métier, préférentiellement par imprégnation dudit support (étape i1 ou étape i2) ou dudit solide (étape i3) par au moins un précurseur dudit métal du groupe VIII et au moins un précurseur dudit métal du groupe VIB présents en solution. Il peut s'agir d'imprégnation à sec ou d'imprégnation en excès réalisée selon des méthodes bien connues de l'Homme du métier. De manière préférée, une imprégnation à sec est réalisée, laquelle consiste à mettre en contact ledit support (étape i1 ou étape i2) ou ledit solide (étape i3) avec au moins un précurseur dudit métal du groupe VIII et au moins un précurseur dudit métal du groupe VIB présents dans une ou plusieurs solutions, dont le volume total est égal au volume poreux du support à imprégner ou dudit solide à imprégner. La(es)dite(s) solutions contien(nen)t les précurseurs métalliques du ou des métaux du groupe VIII et du ou des métaux du groupe VIB à la concentration voulue pour obtenir la teneur souhaitée en éléments hydro-déshydrogénants dans la phase active du catalyseur. Chaque étape d'imprégnation dudit support (étape i1 ou étape i2) ou dudit solide (étape i3) par au moins un précurseur dudit métal du groupe VIII et au moins un précurseur dudit métal du groupe VIB est préférentiellement suivie d'une étape de maturation, puis d'une étape de séchage préférentiellement réalisée à une température comprise entre 50 et 200°C, très préférentiellement comprise entre 65 et 180°C et de manière encore plus préférée entre 75 et 160°C. Ladite étape de séchage est éventuellement suivie d'une étape de calcination.

Le(s)dit(s) métal(ux) du groupe VIII et le(s)dit(s) métal(ux) du groupe VIB sont mis au contact dudit support (étape i1 ou étape i2) respectivement dudit solide (étape i3) par l'intermédiaire de tout précurseur métallique soluble en phase aqueuse ou en phase organique. De manière préférée, le(s)dit(s) précurseur(s) du(es) métal(ux) du groupe VIII et le(s)dit(s) précurseur(s) du(es) métal(ux) du groupe VIB sont introduits en solution aqueuse.

Les précurseurs du(es) métal(ux) du groupe VIII sont avantageusement choisis parmi les oxydes, les hydroxydes, les hydroxycarbonates, les carbonates et les nitrates des éléments du groupe VIII. L'hydroxycarbonate de nickel, le nitrate de cobalt, le carbonate de cobalt ou l'hydroxyde de cobalt sont utilisés de manière préférée.

Les précurseurs de molybdène utilisés pour la mise en oeuvre de ladite étape i) du procédé de l'invention sont bien connus de l'homme du métier. Par exemple, parmi les sources de molybdène, on peut utiliser les oxydes et hydroxydes, les acides molybdiques et leurs sels en particulier les sels d'ammonium tels que le molybdate d'ammonium,

l'heptamolybdate d'ammonium, l'acide phosphomolybdique ($H_3PMo_{12}O_{40}$) et leurs sels, et éventuellement l'acide silicomolybdique ($H_4SiMo_{12}O_{40}$) et les sels correspondants. Les sources de molybdène peuvent également être tout hétéropolycomposé de type Keggin, Keggin lacunaire, Keggin substitué, Dawson, Anderson, Strandberg, par exemple. On utilise de préférence le trioxyde de molybdène et les hétéropolyanions de type Strandberg, Keggin, Keggin lacunaire ou Keggin substitué connus de l'Homme du métier. Les précurseurs de tungstène utilisés pour la mise en oeuvre de ladite étape i) du procédé de préparation de l'invention sont bien connus de l'homme du métier. Par exemple, parmi les sources de tungstène, on peut utiliser les oxydes et hydroxydes, les acides tungstiques et leurs sels en particulier les sels d'ammonium tels que le tungstate d'ammonium, le métatungstate d'ammonium, l'acide phosphotungstique ($H_3PWo_{12}O_{40}$) et leurs sels, et éventuellement l'acide silicotungstique ($H_4SiW_{12}O_{40}$) et ses sels. Les sources de tungstène peuvent également être tout hétéropolycomposé de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin substitué connus de l'Homme du métier.

Le procédé de préparation selon l'invention comporte plusieurs modes de mise en oeuvre.

Un premier mode de mise en oeuvre consiste, conformément à ladite étape i1) du procédé de préparation de l'invention, à mettre en contact au moins un précatalyseur comprenant au moins un métal du groupe VIII, au moins un métal du groupe VIB et au moins un support formé d'au moins un oxyde avec au moins un composé organique formé d'au moins un oligosaccharide cyclique composé d'au moins 6 sous-unités glucopyranose liées en $\alpha$-(1,4). Selon l'invention, ledit premier mode de mise en oeuvre est une préparation dite "post-imprégnation".

Selon une première variante de réalisation de ladite étape i1), le précatalyseur est préparé en procédant au dépôt d'au moins dudit métal du groupe VIII et d'au moins dudit métal du groupe VIB sur ledit support par toute méthode connue de l'Homme du métier, préférentiellement par imprégnation à sec, imprégnation en excès ou encore par dépôt-précipitation selon des méthodes bien connues de l'Homme du métier. Le dépôt des précurseurs des métaux des groupes VIB et VIII peut être effectué par une ou plusieurs imprégnations. Une étape de maturation est réalisée à la suite de chaque étape d'imprégnation desdits métaux des groupes VIII et VIB. Une étape de séchage intermédiaire, par exemple effectuée à une température comprise entre 50 et 200°C et préférentiellement comprise entre 75 et 160°C, est avantageusement réalisée entre deux imprégnations successives. Après le dépôt de la quantité totale voulue en métaux des groupes VIB et VIII, le solide imprégné obtenu est séché, par exemple à une température comprise entre 50 et 200°C et préférentiellement comprise entre 75 et 160°C, et avantageusement calciné à une température comprise entre 350 et 600°C, préférentiellement entre 410 et 510°C, de manière à obtenir ledit précatalyseur.

Selon une deuxième variante de réalisation de ladite étape i1), le précatalyseur est un catalyseur comprenant au moins un métal du groupe VIII, au moins un métal du groupe VIB et au moins un support formé d'au moins un oxyde, ledit catalyseur ayant été régénéré pour éliminer le coke formé à la suite du fonctionnement dudit catalyseur dans une unité réactionnelle. La régénération du catalyseur usé est réalisée par combustion du coke, généralement en contrôlant l'exotherme lié à la combustion du coke. Le catalyseur régénéré utilisé comme précatalyseur est ensuite mis au contact d'au moins un composé organique formé d'au moins un oligosaccharide cyclique composé d'au moins 6 sous-unités glucopyranose liées en $\alpha$-(1,4).

La mise en contact subséquente dudit composé organique avec ledit précatalyseur obtenu selon la première ou la deuxième variante de réalisation de ladite étape i1) est suivie d'une étape de maturation puis d'au moins une étape de séchage, laquelle est réalisée dans les mêmes conditions que celles opérées pour ladite étape ii), et enfin d'au moins une étape de calcination laquelle est réalisée dans les mêmes conditions que celles opérées pour ladite étape iii).

Un deuxième mode de mise en oeuvre du procédé de préparation selon l'invention consiste, conformément à ladite étape i2), à procéder au dépôt des précurseurs desdits métaux des groupes VIII et VIB et à celui dudit composé organique, sur ledit support, par au moins une étape de co-imprégnation, préférentiellement réalisée à sec. Ledit deuxième mode de mise en oeuvre comprend la mise en oeuvre d'une ou plusieurs étapes de co-imprégnation. Il est avantageux de procéder à l'imprégnation d'une partie de la quantité totale désirée en métaux des groupes VIB et VIII avant ou après ladite étape de co-imprégnation. Chacune des étapes de co-imprégnation est suivie d'une étape de maturation puis d'au moins une étape de séchage et éventuellement d'au moins une étape de calcination. La dernière étape de dépôt des précurseurs des métaux des groupes VIII et VIB et/ou dudit composé organique de manière à obtenir le catalyseur préparé selon le procédé de l'invention, de préférence l'étape de co-imprégnation lorsque ledit deuxième mode de mise en oeuvre ne comprend comme étape d'imprégnation qu'une étape de co-imprégnation, est suivie d'au moins une étape de séchage, laquelle est réalisée dans les mêmes conditions que celles opérées pour ladite étape ii), et enfin d'au moins une étape de traitement thermique, de préférence une étape de calcination, laquelle est réalisée dans les mêmes conditions que celles opérées pour ladite étape iii). Un troisième mode de mise en oeuvre du procédé de préparation selon l'invention consiste, conformément à ladite étape i3), à mettre en contact au moins ledit support avec au moins un composé organique formé d'au moins un oligosaccharide cyclique composé d'au moins 6 sous-unités glucopyranose liées en $\alpha$-(1,4) puis à mettre en contact ledit support imprégné dudit composé organique avec au moins un précurseur d'au moins dudit métal du groupe VIII et au moins un précurseur d'au moins dudit métal du groupe VIB. La première étape de mise en contact d'au moins dudit support avec ledit composé organique est préférentiellement immédiatement

suivie d'une étape de maturation puis d'au moins une étape de séchage et éventuellement d'au moins une étape de calcination avant une deuxième étape de mise en contact du solide issu de ladite première étape avec les précurseurs des métaux des groupes VIII et VIB. De manière avantageuse, ladite première étape est suivie de plusieurs étapes d'imprégnation des précurseurs des métaux des groupes VIB et VIII. La préparation du catalyseur conformément audit troisième mode se termine par au moins une étape de séchage, laquelle est réalisée dans les mêmes conditions que celles opérées pour ladite étape ii), et enfin au moins une étape de traitement thermique, de préférence une étape de calcination, laquelle est réalisée dans les mêmes conditions que celles opérées pour ladite étape iii).

Selon un mode particulier de mise en oeuvre du procédé de préparation selon l'invention, une partie de la quantité totale des métaux des groupes VIB et/ou VIII présents dans la phase active du catalyseur est introduite au moment de la mise en forme du support. En particulier, le(s)dit(s) métal(ux) du groupe VIB est(sont) introduit(s) au moment de la mise en forme dudit support dans une quantité telle qu'au plus 10% poids, de préférence au plus 5% poids, du(es)dit(s) métal(ux) du groupe VIB présent(s) dans la phase active du catalyseur sont introduits au moment de la mise en forme, le reste de la quantité en métal(ux) du groupe VIB étant introduit au cours de la mise en oeuvre de ladite étape i) du procédé de préparation selon l'invention. De manière préférée, le(s)dit(s) métal(ux) du groupe VIB sont partiellement introduits au moment du malaxage avec un gel d'alumine choisi comme matrice. De manière préférée, l'élément du groupe VIB est introduit en même temps que l'élément du groupe VIII. De manière avantageuse, le(s) métal(ux) du groupe VIB est(sont) introduit(s) en même temps que le(s) métal(ux) du groupe VIII.

Selon un autre mode particulier de mise en oeuvre du procédé de préparation selon l'invention, l'ensemble de la quantité des métaux des groupes VIB et VIII est introduit, après la mise en forme et la calcination du support, au cours de la mise en oeuvre de ladite étape i) du procédé de préparation selon l'invention. De manière avantageuse, le(s) métal(ux) du groupe VIB est(sont) introduit(s) en même temps que le(s) métal(ux) du groupe VIII.

Le phosphore éventuellement présent dans la phase active du catalyseur est introduit soit en totalité au cours de l'étape i) du procédé de préparation selon l'invention soit en partie au cours de la mise en forme du support, le reste étant alors introduit au cours de ladite étape i) du procédé de préparation selon l'invention. De manière très préférée, le phosphore est introduit, par imprégnation, en totalité ou au moins en partie au cours de ladite étape i) du procédé de préparation selon l'invention et de manière encore plus préférée, il est introduit en mélange avec l'un au moins des précurseurs des métaux des groupes VIB et/ou VIII au cours de l'une des étapes choisies parmi les étapes i1), i2) et i3). L'imprégnation du phosphore au cours de ladite étape i) du procédé de préparation selon l'invention, en particulier lorsque le phosphore est introduit seul (c'est-à-dire en l'absence de tout autre élément de la phase active du catalyseur), est suivie d'une étape de séchage à une température comprise entre 50 et 200°C, préférentiellement entre 65 et 180°C et plus préférentiellement entre 75 et 160°C. La source de phosphore préférée est l'acide orthophosphorique $H_3PO_4$, toutefois ses sels et esters comme les phosphates d'ammonium conviennent également. Le phosphore peut également être introduit en même temps que le(s) élément(s) du groupe VIB sous la forme d'hétéropolyanions de Keggin, Keggin lacunaire, Keggin substitué ou de type Strandberg bien connus de l'Homme du métier.

Le(s) dopant(s) éventuellement présent(s) dans la phase active du catalyseur, sous la forme de bore et/ou de fluor, est(sont) introduit(s) soit en totalité au cours de l'étape i) du procédé de préparation selon l'invention soit en totalité au cours de la préparation du support et préférentiellement au cours de la mise en forme du support soit encore en partie au cours de la préparation du support, le reste étant alors introduit au cours de ladite étape i) du procédé de préparation selon l'invention. De manière très préférée, le dopant est introduit, par imprégnation, en totalité ou en partie au cours de ladite étape i) du procédé de préparation selon l'invention et de manière encore plus préférée, il est introduit en mélange avec l'un au moins des précurseurs des métaux des groupes VIB et/ou VIII au cours de l'une des étapes choisies parmi les étapes i1), i2) et i3). L'imprégnation du dopant au cours de ladite étape i) du procédé de préparation selon l'invention, en particulier lorsque le dopant est introduit seul (c'est-à-dire en l'absence de tout autre élément de la phase active du catalyseur), est suivie d'une étape de séchage à une température comprise entre 50 et 200°C, préférentiellement entre 65 et 180°C et plus préférentiellement entre 75 et 160°C. La source de bore peut être l'acide borique, de préférence l'acide orthoborique $H_3BO_3$, le biborate ou le pentaborate d'ammonium, l'oxyde de bore, les esters boriques. Le bore peut être introduit par exemple par une solution d'acide borique dans un mélange eau/alcool ou encore dans un mélange eau/éthanolamine. Les sources de fluor qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé par réaction entre un composé organique et l'acide fluorhydrique. Le fluor peut être introduit par exemple par imprégnation d'une solution aqueuse d'acide fluorhydrique ou de fluorure d'ammonium ou encore de bifluorure d'ammonium.

Ladite étape ii) de séchage, mise en oeuvre pour la préparation du catalyseur selon le procédé de l'invention, est réalisée à une température comprise entre 50 et 200°C, de préférence entre 65 et 180°C et de manière encore plus préférée entre 75 et 160°C. Ladite étape ii) est préférentiellement réalisée pendant une durée comprise entre 1 et 48 heures, plus préférentiellement comprise entre 1 et 36 heures. Ladite étape de séchage permet d'évacuer le(s) solvant(s) utilisé(s) au cours de la mise en oeuvre de ladite étape i).

Ladite étape de séchage est suivie d'au moins une étape de traitement thermique iii) pour décomposer ledit composé organique formé d'au moins un oligosaccharide cyclique composé d'au moins 6 sous-unités glucopyranose liées en $\alpha$-(1,4). Ledit traitement thermique est réalisé à une température comprise entre 350 et 600°C, de préférence entre 370 et 550°C et de façon encore plus préférée entre 410 et 510°C. Il est avantageusement réalisé sous air ou sous gaz inerte dans tout équipement connu de l'Homme de l'art pour réaliser ce type de traitement thermique. De manière préférée, le traitement thermique est réalisé sous air et il s'agit donc d'une calcination. Le traitement thermique est réalisé pendant une durée avantageusement comprise entre 1 et 6 heures, et de manière préférée entre 1 et 3 heures.

Le catalyseur, obtenu à l'issue de ladite étape iii), après mise en oeuvre des étapes i) et ii) selon le procédé de l'invention, se trouve à l'état oxyde.

Le procédé de préparation du catalyseur selon l'invention comprend avantageusement au moins une étape de sulfuration iv) de sorte que la phase active du catalyseur se présente sous forme sulfure en vue de la mise en oeuvre dudit catalyseur dans un procédé d'hydrotraitement tel que décrit plus bas dans la présente description. Ladite étape de sulfuration est effectuée après la mise en oeuvre de ladite étape iii). Ce traitement d'activation par sulfuration est bien connu de l'Homme du métier et peut être effectué par toute méthode connue de l'Homme du métier. Ladite étape de sulfuration est réalisée par la mise en contact dudit catalyseur issu de ladite étape iii) du procédé de préparation selon l'invention avec au moins un composé organique soufré décomposable et générateur d'$H_2S$ ou par la mise en contact direct dudit catalyseur avec un flux gazeux d'$H_2S$, par exemple dilué dans l'hydrogène. Ledit composé organique soufré est avantageusement choisi parmi les alkyldisulfures tels que le disulfure de diméthyle (DMDS), les alkylsulfures tel que le sulfure de diméthyle, les mercaptans tel que le n-butylmercaptan, les composés polysulfures de type tertiononylpolysulfure tels que le TPS-37 ou le TPS-54 commercialisés par la société ARKEMA, ou tout autre composé connu de l'homme du métier permettant d'obtenir une bonne sulfuration du catalyseur. Ladite étape iv) de sulfuration peut être réalisée *in situ* (c'est-à-dire après chargement du catalyseur dans l'unité réactionnelle du procédé d'hydrotraitement selon l'invention décrit plus bas dans la présente description) ou *ex situ* (c'est-à-dire avant chargement du catalyseur dans l'unité réactionnelle du procédé d'hydrotraitement selon l'invention décrit plus bas dans la présente description) à une température comprise entre 200 et 600°C et plus préférentiellement entre 300 et 500°C.

Le catalyseur, issu de ladite étape iv), se trouve avant la mise en oeuvre du procédé d'hydrotraitement selon l'invention, au moins partiellement sous forme sulfurée. Il peut également comprendre une phase métallique oxyde, qui n'a pas été transformée lors de ladite étape de sulfuration iv). Ledit catalyseur est entièrement débarrassé dudit composé organique formé d'au moins un oligosaccharide cyclique composé d'au moins 6 sous-unités glucopyranose, liées en $\alpha$-(1,4).

La présente invention a également pour objet un procédé d'hydrotraitement d'une charge hydrocarbonée ayant un point d'ébullition supérieur ou égal à 250°C et comprenant au moins un hétéroatome, ledit procédé d'hydrotraitement comprenant la mise en contact de ladite charge hydrocarbonée avec au moins un catalyseur sulfuré obtenu selon le procédé de préparation selon l'invention.

Ladite charge hydrocarbonée ayant un point d'ébullition supérieur ou égal à 250°C, traitée selon le procédé d'hydrotraitement selon l'invention, est avantageusement choisie parmi les gas-oils, les gas-oils sous vide, les résidus atmosphériques, les résidus sous vide, les distillats atmosphériques, les distillats sous vide, les fuels lourds, les résidus ou les bruts désasphaltés, les charges provenant des procédés de conversions thermiques ou catalytiques, les charges issues de la biomasse, les huiles, les cires et les paraffines, lesdites charges étant prises seules ou en mélange.

Ladite charge hydrocarbonée ayant un point d'ébullition supérieur ou égal à 250°C, traitée selon le procédé d'hydrotraitement selon l'invention, comprend au moins un hétéroatome choisi parmi le soufre, l'azote et l'oxygène, pris seul ou en mélange. De manière préférée, ladite charge hydrocarbonée comprend au moins du soufre. Ladite charge hydrocarbonée peut également comprendre des métaux, en particulier du nickel et du vanadium. Elle peut également comprendre des composés insaturés, en particulier des oléfines et dioléfines ainsi que des composés aromatiques.

Le procédé d'hydrotraitement selon l'invention vise à éliminer les impuretés présentes dans ladite charge, à savoir le(s) hétéroatome(s) et éventuellement les métaux et/ou les composés aromatiques. Le procédé d'hydrotraitement selon l'invention met particulièrement en oeuvre des réactions d'hydrogénation, d'hydrodéazotation, d'hydrodésaromatisation, d'hydrodésulfuration et/ou d'hydrodémétallation.

Le procédé d'hydrotraitement selon l'invention est réalisé en présence d'hydrogène et est mis en oeuvre dans les conditions opératoires suivantes : la température est comprise entre 180 et 450 °C, de préférence entre 250 et 440 °C, la pression totale est comprise entre 0,5 et 30 MPa, de préférence entre 1 et 18 MPa, la vitesse volumique horaire est comprise entre 0,1 et 20 $h^{-1}$, de préférence entre 0,2 et 5 $h^{-1}$, et le rapport hydrogène/charge exprimé en volume d'hydrogène, mesuré dans les conditions normales de température et pression, par volume de charge liquide est compris entre 50 Nl/l à 2 000 Nl/l.

Selon un premier mode particulier, ledit procédé d'hydrotraitement selon l'invention est un procédé d'hydrodésulfuration d'une coupe gazole réalisé en présence d'au moins un catalyseur sulfuré préparé selon le procédé de l'invention. Ledit procédé d'hydrodésulfuration (HDS) selon l'invention vise à éliminer les composés soufrés présents dans ladite coupe gazole de façon à atteindre les normes environnementales en vigueur, à savoir une teneur en soufre

autorisée jusqu'à 10 ppm.

Ladite coupe gazole à hydrodésulfurer selon le procédé de l'invention contient de 0,04 à 5 % poids de soufre. Elle est avantageusement issue de la distillation directe (ou gazole straight run selon la terminologie anglo-saxonne), d'une unité de cokéfaction (coking selon la terminologie anglo-saxonne), d'une unité de viscoréduction (visbreaking selon la terminologie anglo-saxonne), d'une unité de vapocraquage (steam cracking selon la terminologie anglo-saxonne) et/ou d'une unité de craquage catalytique (Fluid Catalytic Cracking selon la terminologie anglo-saxonne). Ladite coupe gazole présente un point d'ébullition préférentiellement compris entre 250 et 400°C.

Le procédé d'hydrodésulfuration selon l'invention est mis en oeuvre dans les conditions opératoires suivantes : une température comprise entre 200 et 400°C, préférentiellement entre 330 et 380°C, une pression totale comprise entre 2 MPa et 10 MPa et plus préférentiellement entre 3 MPa et 7 MPa avec un ratio volume d'hydrogène par volume de charge hydrocarbonée, compris entre 100 et 600 litres par litre et plus préférentiellement entre 200 et 400 litres par litre et une vitesse volumique horaire comprise entre 1 et 10 $h^{-1}$, préférentiellement entre 2 et 8 $h^{-1}$. La VVH correspond à l'inverse du temps de contact exprimée en heure et est définie par le rapport du débit volumique de charge hydrocarbonée liquide par le volume de catalyseur chargé dans l'unité réactionnelle mettant en oeuvre le procédé d'hydrodésulfuration selon l'invention.

L'unité réactionnelle mettant en oeuvre le procédé d'hydrodésulfuration selon l'invention est préférentiellement opérée en lit fixe, en lit mobile ou en lit bouillonnant, de préférence en lit fixe.

Le catalyseur employé pour la mise en oeuvre dudit procédé d'hydrodésulfuration selon l'invention et produit selon le procédé de préparation de l'invention comprend préférentiellement une fonction hydro-déshydrogénante choisie dans le groupe formé par les combinaisons des éléments cobalt-molybdène, nickel-molybdène et nickel-cobalt-molybdène. La teneur totale en éléments hydro-déshydrogénants, c'est-à-dire en métal(ux) du groupe VIII et en métal(ux) du groupe VIB et préférentiellement en molybdène et en cobalt et/ou nickel, est comprise entre 7 et 50 % poids oxydes de métaux des groupes VIB et VIII par rapport au poids total du catalyseur sous forme oxyde. La teneur en métal(ux) du groupe VIB, préférentiellement en molybdène, est comprise entre 4 et 40% poids d'oxyde(s) de métal(ux) du groupe VIB par rapport au poids total du catalyseur, de préférence entre 8 et 35% poids et de manière plus préférée entre 10 et 30% poids d'oxyde(s) de métal(ux) du groupe VIB par rapport au poids total du catalyseur. La teneur en métal(ux) du groupe VIII, préférentiellement en cobalt et/ou nickel, est comprise entre 1 et 10% poids d'oxyde(s) de métal(ux) du groupe VIII par rapport au poids total du catalyseur, de préférence entre 1,5 et 9% poids et de manière plus préférée entre 2 et 8% poids d'oxyde(s) de métal(ux) du groupe VIII par rapport au poids total du catalyseur. De manière très préférée, ledit catalyseur comprend du phosphore dont la teneur dans le catalyseur sous forme oxyde est de préférence comprise entre 0,1 et 20% poids de $P_2O_5$.

Selon un deuxième mode particulier, ledit procédé d'hydrotraitement selon l'invention est un procédé d'hydrotraitement (HDT) d'une charge hydrocarbonée lourde ayant un point d'ébullition supérieur ou égal à 370°C réalisé en présence d'au moins un catalyseur sulfuré préparé selon le procédé de l'invention. Ladite charge hydrocarbonée à hydrotraiter selon le procédé de l'invention contient avantageusement de 0,5 à 6 % poids de soufre. Elle présente généralement plus de 1% en poids de molécules ayant un point d'ébullition supérieur à 500°C. Elle présente une teneur en métaux, particulièrement en nickel et vanadium, supérieure à 1 ppm poids, de préférence supérieure à 20 ppm poids, une teneur en asphaltènes, définis comme la fraction de la charge précipitant dans l'heptane, supérieure à 0,05 % poids, de préférence supérieure à 1 % poids. Le procédé d'hydrotraitement d'une charge hydrocarbonée lourde ayant un point d'ébullition supérieur ou égal à 370°C selon l'invention vise généralement à la fois l'hydrodésulfuration et l'hydrodémétallation.

Ladite charge hydrocarbonée lourde à hydrotraiter selon le procédé de l'invention est par exemple choisie parmi les coupes suivantes : les distillats sous vide, les résidus atmosphériques, les résidus sous vide issus de la distillation directe, les huiles désasphaltées, les résidus issus des procédés de conversion tels que ceux provenant d'une unité de cokéfaction ou d'une unité d'hydroconversion en lit fixe, en lit bouillonnant ou encore en lit mobile, et les mélanges de chacune de ces coupes. Ladite charge hydrocarbonée à hydrotraiter est avantageusement constituée soit d'une ou plusieurs desdites coupes soit d'une ou plusieurs desdites coupes diluée(s) avec une fraction hydrocarbonée ou un mélange de fractions hydrocarbonées pouvant être choisies parmi une huile de coupe légère (LCO selon les initiales de la dénomination anglo-saxonne de Light Cycle Oil), une huile de coupe lourde (HCO selon les initiales de la dénomination anglo-saxonne de Heavy Cycle Oil), une huile décantée (DO selon les initiales de la dénomination anglo-saxonne de Decanted Oil), un slurry (boue de pétrole), les produits issus du procédé FCC, ou pouvant venir directement de la distillation, les fractions gazoles notamment celles obtenues par distillation sous vide dénommée selon la terminologie anglo-saxonne VGO (Vaccuum Gas Oil). Ladite charge hydrocarbonée lourde à hydrotraiter peut comprendre dans certains cas avantageusement une ou plusieurs coupes issues du procédé de liquéfaction du charbon ainsi que des extraits aromatiques.

La charge hydrocarbonée lourde à hydrotraiter selon le procédé de l'invention conformément audit deuxième mode particulier peut avantageusement aussi être mélangée avec du charbon sous forme de poudre, ce mélange est généralement appelé slurry (boue de pétrole). Ladite charge comprend alors avantageusement des sous-produits issus

de la conversion du charbon et est re-mélangée à du charbon frais. La teneur en charbon dans la charge lourde à hydrotraiter est telle que le rapport volumique charge / charbon est compris entre 0,1 et 1, et de préférence entre 0,15 et 0,3. Le charbon peut contenir de la lignite, être un charbon sub-bitumineux (selon la terminologie anglo-saxonne), ou encore bitumineux. Tout autre type de charbon convient, à la fois pour une mise en oeuvre du procédé d'hydrotraitement selon l'invention dans une unité réactionnelle fonctionnant en lit fixe ou en lit bouillonnant.

Le procédé d'hydrotraitement d'une charge hydrocarbonée lourde selon l'invention est mis en oeuvre dans les conditions opératoires suivantes : une température comprise entre 320 et 450°C, préférentiellement entre 350 et 410°C, une pression totale comprise entre 3 MPa et 30 MPa et plus préférentiellement entre 10 MPa et 20 MPa avec un ratio volume d'hydrogène par volume de charge hydrocarbonée, compris entre 200 et 2000 litres par litre et plus préférentiellement entre 500 et 1500 litres par litre et une vitesse volumique horaire comprise entre 0,5 et 5 $h^{-1}$, préférentiellement entre 0,1 et 0,8 $h^{-1}$. La VVH correspond à l'inverse du temps de contact exprimée en heure et est définie par le rapport du débit volumique de charge hydrocarbonée liquide par le volume de catalyseur chargé dans l'unité réactionnelle mettant en oeuvre le procédé d'hydrodésulfuration selon l'invention.

Le procédé d'hydrotraitement d'une charge hydrocarbonée lourde selon l'invention est avantageusement mis en oeuvre dans une unité réactionnelle fonctionnant en lit fixe ou en lit bouillonnant.

Le catalyseur employé pour la mise en oeuvre dudit procédé d'hydrotraitement d'une charge hydrocarbonée lourde ayant un point d'ébullition supérieur ou égal à 370°C selon l'invention et produit selon le procédé de préparation de l'invention comprend préférentiellement une fonction hydro-déshydrogénante choisie dans le groupe formé par les combinaisons des éléments cobalt-molybdène, nickel-molybdène et nickel-cobalt-molybdène. La teneur totale en éléments hydro-déshydrogénants, c'est-à-dire en métal(ux) du groupe VIII et en métal(ux) du groupe VIB et préférentiellement en molybdène et en cobalt et/ou nickel, est comprise entre 6 et 20 % poids oxydes de métaux des groupes VIB et VIII par rapport au poids total du catalyseur sous forme oxyde. De manière très préférée, ledit catalyseur comprend du phosphore dont la teneur dans le catalyseur sous forme oxyde est de préférence comprise entre 0,1 et 8 % poids de $P_2O_5$.

Dans ces utilisations, les catalyseurs obtenus par le procédé selon l'invention présentent une activité améliorée par rapport aux catalyseurs de l'art antérieur.

Les exemples qui suivent précisent l'invention sans toutefois en limiter la portée.

EXEMPLES

Exemple 1 (comparatif): Préparation des précatalyseurs C1, C2, C3, C4

Une matrice composée de boehmite tabulaire ultrafine ou gel d'alumine, commercialisée par la société Condea Chemie GmbH a été utilisée pour la préparation du support de chacun des catalyseurs C1, C2, C3 et C4. Ce gel a été mélangé à une solution aqueuse contenant de l'acide nitrique à 66 % vol. (7 % en poids d'acide par gramme de gel sec), puis malaxé pendant 15 minutes. A l'issue de ce malaxage, la pâte obtenue est passée à travers une filière ayant des orifices cylindriques de diamètre égal à 1,6 mm. Les extrudés sont ensuite séchés pendant une nuit à 120 °C, puis calcinés à 600 °C pendant 2 heures sous air humide contenant 50 g d'eau par kg d'air sec. On obtient ainsi des extrudés de support, ayant une surface spécifique déterminée par la méthode BET de 300 $m^2/g$. L'analyse par la diffraction des rayons X révèle que le support est uniquement composé d'alumine gamma cubique de faible cristallinité. Le volume poreux du support est égal à 0,65 ml/g.

Le support d'alumine gamma sous forme d'extrudés, obtenu ci-dessus, est imprégné à sec avec une solution d'imprégnation laquelle est préparée par dissolution à chaud d'oxyde de molybdène (24,34 g) et d'hydroxyde de cobalt (5,34 g) dans une solution d'acide phosphorique (7,47 g) en solution aqueuse. Après imprégnation à sec, les extrudés sont laissés à maturer en atmosphère saturée en eau pendant 12 h, puis ils sont séchés une nuit à 100°C. On obtient ainsi le précatalyseur C1 (forme séchée non calcinée).

On procède à la calcination d'une quantité du précatalyseur C1 à 450°C pendant 2 heures. On obtient le précatalyseur C2 (forme calcinée).

La composition finale des précatalyseurs C1 et C2, exprimée sous forme d'oxydes, est alors la suivante : $MoO_3 = 22,5 \pm 0,2$ (% en poids), $CoO = 4,1 \pm 0,1$ (% en poids) et $P_2O_5 = 4,0 \pm 0,1$ (% en poids). Le rapport molaire Co/Mo est égal à 0,35 et le rapport molaire P/Mo est égal à 0,36.

Le précatalyseur calciné C2 est chargé dans une unité lit traversé et sulfuré par un gazole de distillation directe additivé de 2 % poids de disulfure de diméthyle. Un test d'HDS d'un mélange de gazole de distillation directe et d'un gazole en provenance du craquage catalytique (LCO) est alors conduit pendant 300 h. Après test, le précatalyseur usé est déchargé, recueilli et lavé au toluène à reflux puis séparé en deux lots. Le premier lot est régénéré en four de combustion contrôlée en introduisant pour chaque palier de température des quantités croissante d'oxygène, ce qui permet de limiter l'exotherme lié à la combustion du coke. Le palier final de régénération est de 450°C. Le précatalyseur ainsi régénéré est analysé par DRX : on note l'absence de raie à 26° caractéristique de la présence de $CoMoO_4$ cristallisé

indésirable. Le solide ainsi obtenu correspond au précatalyseur C3. Le second lot de précatalyseur usé lavé est régénéré en four à moufle à 450°C sans contrôle de l'exotherme lié à la combustion du coke. L'analyse DRX réalisée après régénération montre la présence d'une raie fine à 26°, caractéristique de la présence de $CoMoO_4$ cristallisé. Le solide ainsi obtenu correspond au précatalyseur C4. Il possède une couleur bleu vif très prononcée, caractéristique de la présence de $CoMoO_4$.

La composition finale des précatalyseurs C3 et C4, exprimée sous forme d'oxydes, est identique à celle des précatalyseurs C1 et C2.

Exemple 2 (conforme à l'invention) : Préparation des catalyseurs C1', C2', C3', C4'

Les catalyseurs C1', C2', C3', C4' sont préparés conformément à ladite étape i1) suivie d'une étape de séchage ii) et d'une étape de calcination iii) selon le procédé de l'invention.

Le catalyseur C1' est obtenu, par imprégnation à sec dudit précatalyseur séché C1 par une solution aqueuse contenant de la β-cyclodextrine (SIGMA-ALDRICH, pureté de 98 %), dans un rapport molaire (Co+Mo)/β-cyclodextrine de 30, et dont le volume est rigoureusement égal au volume poreux du précatalyseur C1. Après l'étape d'imprégnation à sec, les extrudés sont laissés à maturer en atmosphère saturée en eau pendant 12 h, puis ils sont séchés une nuit à 100°C puis calcinés à 450°C pendant 2 heures pour obtenir le catalyseur C1' conforme à l'invention.

C2' est obtenu par le même procédé à partir du précatalyseur C2.

C3' est obtenu par le même procédé à partir du précatalyseur C3.

C4' est obtenu par le même procédé à partir du précatalyseur C4.

La composition finale des catalyseurs C1', C2', C3' et C4', exprimée sous forme d'oxydes, est respectivement identique à celle des précatalyseurs C1, C2, C3 et C4.

Exemple 3 (conforme à l'invention) : Préparation du catalyseur C1" (co-imprégnation)

Le catalyseur C1" est préparé conformément à ladite étape i2) suivie d'une étape de séchage ii) et d'une étape de calcination iii) selon le procédé de l'invention.

La solution pour réaliser la co-imprégnation est préparée par dissolution à chaud d'oxyde de molybdène (24,34 g) et d'hydroxyde de cobalt (5,34 g) dans une solution d'acide phosphorique (7,47 g) en solution aqueuse. Après refroidissement à température ambiante, la β-cyclodextrine (SIGMA-ALDRICH, pureté de 98 %) est rajoutée à la solution dans un rapport (Co+Mo)/β-cyclodextrine de 30.

On obtient ainsi la solution de co-imprégnation.

Le catalyseur C1" est obtenu par imprégnation à sec du support d'alumine gamma sous forme d'extrudés, préparé selon l'exemple 1, par la solution de co-imprégnation dont le volume est rigoureusement égal au volume poreux de la masse dudit support. Après l'étape d'imprégnation à sec, les extrudés sont laissés à maturer en atmosphère saturée en eau pendant 12 h, puis ils sont séchés une nuit à 100°C puis calcinés à 450°C pendant 2 heures pour conduire au catalyseur C1".

La composition finale du catalyseur C1", exprimée sous forme d'oxydes, est alors la suivante : $MoO_3$ = 22,5 ± 0,2 (% en poids), CoO = 4,1 ± 0,1 (% en poids) et $P_2O_5$ = 4,0 ± 0,1 (% en poids). Le rapport molaire Co/Mo est égal à 0,35 et le rapport molaire P/Mo est égal à 0,36.

Exemple 4 (comparatif) : Préparation du catalyseur C5

Le catalyseur séché C5 est obtenu, par imprégnation à sec dudit précatalyseur séché C1 par une solution aqueuse contenant de la β-cyclodextrine (SIGMA-ALDRICH, pureté de 98%), dans un rapport molaire (Co+Mo)/β-cyclodextrine de 30, et dont le volume est rigoureusement égal au volume poreux du précatalyseur C1. Après l'étape d'imprégnation à sec, les extrudés sont laissés à maturer en atmosphère saturée en eau pendant 12 h, puis ils sont séchés une nuit à 100°C pour obtenir le catalyseur séché C5. La température de séchage égale à 100°C n'est pas suffisante pour décomposer la β-cyclodextrine qui reste présente dans la composition catalytique.

La teneur en molybdène, cobalt et phosphore dans la composition finale du catalyseur C5, exprimée sous forme d'oxydes, est la suivante : $MoO_3$ = 20,8 ± 0,2 (% en poids), CoO = 3,8 ± 0,1 (% en poids) et $P_2O_5$ = 3,7 ± 0,1 (% en poids). Le rapport molaire Co/Mo est égal à 0,35 et le rapport molaire P/Mo est égal à 0,36.

Exemple 5 (comparatif) : Préparation des catalyseurs C6, C7 en présence d'un oligosaccharide non cyclique : le lactose

Le lactose ou β-D-galactopyrannosyl(1→4)D-glucopyrannose [*Gal β(1→4) Glc*] est un diholoside (ou disaccharide) de formule brute $C_{12}H_{22}O_{11}$, composé d'une molécule de β-D-galactose (Gal) et d'une molécule de α/β-D-glucose (Glc) reliées entre elles par une liaison osidique β(1→4). Il ne s'agit pas d'un oligosaccharide cyclique. La

formule développée du lactose est donnée ci-dessous :

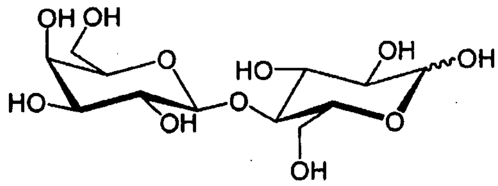

Le catalyseur séché C6 est obtenu, après détermination du volume de reprise en eau du précatalyseur séché C1, par imprégnation à sec dudit précatalyseur séché C1 par une solution aqueuse contenant du lactose (SIGMA ALDRICH), dans un rapport molaire (Co+Mo)/lactose de 10, et dont le volume est rigoureusement égal au volume poreux du précatalyseur C1. Après l'étape d'imprégnation à sec, les extrudés sont laissés à maturer en atmosphère saturée en eau pendant 12 h, puis ils sont séchés une nuit à 100°C pour obtenir le catalyseur séché C6.

Le catalyseur C7 est obtenu par calcination du catalyseur C6 à 500°C pendant 2 heures.

La teneur en molybdène, cobalt et phosphore dans la composition finale des catalyseurs C6 et C7, exprimée sous forme d'oxydes, est la suivante : $MoO_3$, = 22,5 ± 0,2 (% en poids), CoO = 4,1 ± 0,1 (% en poids) et $P_2O_5$ = 4,0 ± 0,1 (% en poids). Le rapport molaire Co/Mo des catalyseurs C6 et C7 est égal à 0,35 et le rapport molaire P/Mo est égal à 0,36.

Exemple 6 : Performances catalytiques des précatalyseurs C1, C2, C3 et C4 et des catalyseurs C1', C2', C3', C4', C1", C5, C6 et C7 en test molécules modèles d'HDS du thiophène

Une charge modèle contenant 10 % poids de 2,3-diméthylbut-2-ène et 0,33 % poids de 3-méthylthiophène (soit 0,1 % poids de soufre dans la charge) est utilisée pour l'évaluation des performances catalytiques des différents catalyseurs. Le solvant utilisé est l'heptane.

Les catalyseurs C1, C2, C3 et C4 et les catalyseurs C1', C2', C3', C4', C1", C5, C6 et C7 sont préalablement sulfurés *ex situ* en phase gazeuse à 450°C pendant 2 heures sous flux d'$H_2S$ dans l'hydrogène (15% vol de $H_2S$ dans $H_2$).

La réaction d'hydrodésulfuration est opérée dans un réacteur fermé de type Grignard sous 3,5 MPa de pression d'hydrogène, à 250°C. Chacun des précatalyseurs C1, C2, C3 et C4 et des catalyseurs C1', C2', C3', C4', C1", C5, C6 et C7 sont placés successivement dans ledit réacteur. Des effluents sont prélevés à différents intervalles de temps et analysés par chromatographie en phase gazeuse de façon à observer la disparition des réactifs.

Les performances catalytiques des précatalyseurs C1, C2, C3 et C4 et des catalyseurs C1', C2', C3', C4', C1", C5, C6 et C7 sont évaluées à partir de l'activité catalytique en HDS de molécule modèle. L'activité des précatalyseurs et des catalyseurs en HDS du 3-méthylthiophène est exprimée en constante de vitesse $k_{HDS}$ de la réaction d'hydrodésulfuration (HDS), normalisée par volume de catalyseur sous forme sulfure en supposant un ordre 1 par rapport aux composés soufrés.

Les performances des catalyseurs supportés sur alumine sont données dans le Tableau 1. Les valeurs sont normalisées en prenant le catalyseur calciné C2 comme référence $k_{HDS}$=100.

La comparaison des activités des (pré)catalyseurs C1 (89), C2 (100), C6 (118) et C7 (98) montre que l'utilisation d'un oligosaccharide non cyclique comme le lactose (art antérieur) lors de la préparation du catalyseur d'hydrotraitement s'accompagne d'un gain d'activité HDS uniquement si le catalyseur est non calciné ultérieurement. En effet, le précatalyseur CoMoP/alumine séché C1 présente une activité de 89 contre 100 pour le précatalyseur calciné C2. L'ajout de lactose en post-imprégnation sur C1 suivi d'un séchage (catalyseur C6) permet d'obtenir une activité de 118. Le catalyseur C7 est obtenu par calcination du catalyseur C6. Le catalyseur C7, dépourvu de la présence de lactose en raison de l'étape de calcination, présente une activité proche (98), et même légèrement inférieure, de celle d'un précatalyseur calciné préparé en l'absence de lactose (100 pour le catalyseur C2).

Contrairement au comportement observé avec un diholoside non cyclique tel que le lactose, l'emploi d'un oligosaccharide cyclique tel que la β-cyclodextrine dans la préparation d'un catalyseur conduit à un catalyseur dont l'activité en HDS n'est sensiblement améliorée que si le catalyseur est soumis à traitement thermique permettant la décomposition dudit oligosaccharide avant son fonctionnement dans la zone réactionnelle ($k_{HDS}$ = 128 pour le catalyseur C1' calciné contre $k_{HDS}$ = 86 pour le catalyseur C5 séché). La β-cyclodextrine n'entraîne aucun gain d'activité lorsqu'elle est encore présente sur le catalyseur au moment de sa sulfuration *in situ.*

Tableau 1 : Performances sur charges modèles des précatalyseurs C1, C2, C3, C4 et des catalyseurs C1', C1", C2', C3', C4', C5, C6, C7

| (Pré)catalyseur | Catalyseur de départ | Additif organique | Traitement thermique après ajout de l'additif organique | $k_{HDS}$ relatif/C2 (%) |
|---|---|---|---|---|
| C1(comp.) CoMoP/alumine séché | - | - | - | 89 |
| C2(comp.) CoMoP/alumine calciné | - | - | - | 100 |
| C3 (comp.) CoMoP/alumine régénéré doux | - | - | - | 90 |
| C4 (comp.) CoMoP/alumine régénéré sans contrôle de l'exotherme | - | - | - | 75 |
| C1' (inv.) CoMoP/alumine calciné | C1 | β-cyclodextrine | séchage 100°C calcination 450°C | 128 |
| C1" (inv.) CoMoP/alumine calciné | C1 | β-cyclodextrine | séchage 100°C calcination 450°C | 125 |
| C2' (inv.) CoMoP/alumine calciné | C2 | β-cyclodextrines | séchage 100°C calcination 450°C | 114 |
| C3' (inv.) CoMoP/alumine calciné | C3 | β-cyclodextrine | séchage 100°C calcination 450°C | 103 |
| C4' (inv.) CoMoP/alumine calciné | C4 | β-cyclodextrine | séchage 100°C calcination 450°C | 85 |
| C5(comp.) CoMoP/alumine séché | C1 | β-cyclodextrine | séchage 100°C | 86 |
| C6 (comp.) CoMoP/alumine séché | C1 | lactose | séchage 100°C | 118 |
| C7(comp.) CoMoP/alumine calciné | C1 | lactose | séchage 100°C calcination 450°C | 98 |

La comparaison des résultats obtenus pour les catalyseurs C1' et C1" démontre que la manière dont sont introduits les métaux des groupes VIB et VIII, le phosphore et la β-cyclodextrine est indifférente sur l'activité en HDS du catalyseur obtenu dès lors que la β-cyclodextrine n'est plus présente dans la composition du catalyseur au moment de son fonctionnement dans l'unité réactionnelle.

La comparaison des résultats obtenus pour les catalyseurs C1' respectivement C2' démontre qu'un catalyseur préparé à partir d'un précatalyseur séché respectivement calciné puis imprégné par une solution de β-cyclodextrine (étape i1) présente une activité en HDS sensiblement améliorée.

Les catalyseurs C3' et C4' sont des catalyseurs CoMoP/alumines régénérés. C3' a été régénéré dans des conditions plus douces que C4' qui contient des phases cristallisées, dont $CoMoO_4$ détectable en DRX à 2 theta = 26°. La post-imprégnation de la β-cyclodextrine sur le précatalyseur C3 respectivement C4 suivie d'un séchage et d'une calcination permet d'obtenir le catalyseur C3'(103) respectivement C4' (85) qui présente des performances HDS améliorées par rapport aux précatalyseur de départ C3 (90) respectivement C4 (75).

Exemple 7 : Préparation des catalyseurs C8 (non conforme) et C8' (conforme)

Le catalyseur C8 est obtenu par imprégnation à sec du support d'alumine gamma sous forme d'extrudés, préparé selon l'exemple 1, par une solution d'imprégnation préparée par dissolution à chaud d'oxyde de molybdène et d'hydroxycarbonate de nickel dans une solution d'acide phosphorique en solution aqueuse, le volume de ladite solution d'imprégnation étant rigoureusement égal au volume poreux de la masse de support d'alumine. Les concentrations en précurseurs dans la solution d'imprégnation sont ajustées de manière à déposer sur le support d'alumine les teneurs

pondérales en Mo, Ni et P souhaitées. Après l'étape d'imprégnation à sec, les extrudés sont laissés à maturer en atmosphère saturée en eau pendant 12 h, puis ils sont séchés une nuit à 90°C. On obtient alors un précatalyseur qui est divisé en deux lots. Un premier lot est calciné à 450°C pendant 2 heures pour conduire au catalyseur calciné **C8.** La composition finale du catalyseur C8 exprimée sous forme d'oxydes est alors la suivante : $MoO_3$ = 22,4 ± 0,2 (% en poids), NiO = 4,1 ± 0,1 (% en poids) et $P_2O_5$ = 4,0 ± 0,1 (% en poids).

Le catalyseur C8' est préparé par imprégnation à sec du second lot de précatalyseur séché par une solution aqueuse de β-cyclodextrine dissoute dans l'eau, le volume de ladite solution étant rigoureusement égal au volume poreux du précatalyseur séché. Le rapport molaire (Co+Mo)/β-cyclodextrine = 30. Après une étape de maturation de 3 h à 20°C sous air puis un séchage à 110°C pendant 3 h et enfin une calcination de 2h à 450°C, on obtient le catalyseur **C8'.**

La composition finale du catalyseur C8' est identique à celle du catalyseur C8.

Exemple 8 : Evaluation des performances catalytiques des catalyseurs C8 et C8' en hydrotraitement de gazole de distillation directe

La sulfuration *in situ* du catalyseur C8 respectivement du catalyseur C8' (30 $cm^3$ de catalyseur sous forme d'extrudés mélangés avec 10 $cm^3$ de SiC de granulométrie 0,8 mm) est effectuée à 50 bars, à WH = 2 $h^{-1}$, avec un rapport (de débit volumique) $H_2$/HC entrée = 400 Std l/l. La charge de sulfuration (gazole additivé de 2 % de DMDS Evolution de la société Arkéma) est introduite dans le réacteur sous $H_2$ lorsque celui-ci atteint 150°C. Après une heure à 150°C, la température est augmentée avec une rampe de 25°C/heure jusqu'à 220°C, puis avec une rampe de 12°C/heure jusqu'à atteindre un palier de 350°C, maintenu 12 heures.

Après sulfuration, la température est abaissée à 330 °C et la charge de test est injectée. Le test catalytique s'effectue à une pression totale de 5 MPa, à hydrogène perdu (sans recyclage), à WH = 2 $h^{-1}$, avec un rapport volumique $H_2$/HC en entrée de 400 Std l/l (débit $H_2$= 24 Std $l.h^{-1}$, débit charge = 60 $cm^3.h^{-1}$), et à 330°C, 340°C et 350 °C correspondant à trois points d'activité consécutifs.

Afin de pouvoir évaluer les performances des catalyseurs C8 et C8' en HDS, et de s'affranchir de la présence d'$H_2S$ dans les effluents, le récipient contenant les effluents est strippé à l'azote à raison de 10 $L.h^{-1}$.

Le gazole utilisé ici est issu d'un brut Arabe lourd. Il contient 0,89 % poids de soufre, 100 ppm poids d'azote, 23% poids de composés aromatiques. Sa température moyenne pondérée (TMP) est égal à 324°C et sa densité est égal à 0,8484 g/$cm^3$. La TMP est définie comme le rapport $(T_5+2T_{50}+4T_{95})/7$, où $T_x$ correspond à la température à laquelle "x" % poids est distillé. La TMP prend ainsi en compte la température à laquelle 5% poids de la charge est vaporisée, la température à laquelle 50% poids de la charge est vaporisée et la température à laquelle 95% poids de la charge est vaporisée.

Les performances catalytiques des catalyseurs C8 et C8' sont données dans le tableau 2. Elles sont exprimées en activité relative, en posant que celle du catalyseur C8 est égale à 100 et en considérant qu'elles sont d'ordre apparent 1,5 par rapport au soufre. La relation liant l'activité et la conversion en hydrodésulfuration (%HDS) est donnée par la formule suivante :

$$A_{HDS} = \sqrt{\frac{100}{100 - \%HDS}} - 1$$

où % HDS correspond à la conversion en hydrodésulfuration HDS et est définie par la formule suivante :

$$\%HDS = \frac{S_{charge} - S_{effluent}}{S_{charge}} \times 100$$, S représentant le soufre.

Tableau 2 : Activité relative (à iso-volume de catalyseur) en HDS de gazole de distillation directe des catalyseurs C8 et C8'

| Catalyseur | $A_{HDS}$ relativement à C8 | | |
|---|---|---|---|
| | T = 330 °C | T = 340°C | T = 350 °C |
| C8 | 100 | 100 | 100 |
| C8' | 116 | 117 | 119 |

Les résultats figurant dans le tableau 2 démontrent le gain d'activité HDS important obtenu grâce au catalyseur

C8' préparé selon le procédé de l'invention par rapport au catalyseur C8 préparé en l'absence d'oligosaccharide cyclique.

Au cours du test, la densité des effluents obtenus à chaque température est mesurée à 15°C. L'évolution des densités en fonction de la température, déduite des mesures réalisées au cours du test, permet de donner une indication sur la performance en hydroaromatisation. Les résultats figurent dans le tableau 3 ci-dessous. La diminution de la densité de l'effluent est liée à une déaromatisation plus prononcée.

Tableau 3 : Evolution de la densité de l'effluent après hydrotraitement du gazole de distillation directe sur les catalyseurs C8 et C8'

| Catalyseur | densité de l'effluent | | |
|---|---|---|---|
| | T = 330 °C | T = 340 °C | T = 350 °C |
| C8 | 0,8372 | 0,8361 | 0,8345 |
| C8' | 0,8365 | 0,8347 | 0,8328 |

Les résultats figurant dans le tableau 3 démontrent que le catalyseur C8' préparé selon le procédé de l'invention conduit à une déaromatisation plus efficace que celle obtenue avec le catalyseur C8 préparé en l'absence d'oligosaccharide cyclique. En effet, la conversion vers des composés ayant un point d'ébullition inférieur à 280°C est inférieure à 3%. La diminution de la densité n'est donc pas due à un craquage mais bien à l'hydrogénation des composés aromatiques.

De manière plus globale, les résultats obtenus démontrent que le catalyseur C8' préparé selon le procédé de l'invention conduit à des performances catalytiques améliorées lorsqu'il est utilisé en hydrotraitement de gazole : en particulier, l'activité du catalyseur C8' en HDS et en hydrodéaromatisation est sensiblement améliorée par rapport à celle du catalyseur C8.

Exemple 9 : Préparation d'un catalyseur **C9** (non conforme) et d'un catalyseur **C9'** (conforme)

L'alumine utilisée dans l'exemple 1 a également été utilisée pour réaliser un précurseur catalytique séché de formulation NiCoMoP/alumine. Les précurseurs métalliques utilisés sont le trioxyde de molybdène, le carbonate de cobalt, l'hydroxycarbonate de nickel et l'acide phosphorique. La solution d'imprégnation est réalisée en une étape par chauffage à reflux de ces précurseurs. La cible correspond à une teneur exprimée en % poids oxyde par rapport au catalyseur sec (après perte au feu à 550°C) : NiO/CoO/$MoO_3$/$P_2O_5$ 1/2,3/15/4,4. A l'issue de l'imprégnation à sec, les extrudés sont laissés à maturation durant une nuit en atmosphère saturée en eau puis placés 2h dans une étuve à 120°C. On obtient alors le précurseur catalytique séché qui est divisé en deux lots :

- un premier lot est calciné à 450°C pendant 3h pour donner le catalyseur C9 (non conforme)
- le second lot est imprégné avec une solution aqueuse contenant de la β-cyclodextrine (SIGMA ALDRICH, pureté de 98%) avec un rapport molaire (Co+Mo+Ni)/β-cyclodextrine de 30 jusqu'à apparition de l'humidité naissante, ce qui montre que la porosité du précurseur catalytique a été remplie de la solution contenant la β-cyclodextrine. Ensuite, une maturation de 12 h est réalisée, suivie d'un séchage à 120°C pendant 1h et d'une calcination à 450°C pendant 2 h. Le catalyseur ainsi obtenu est le catalyseur **C9'**, conforme à l'invention.

Exemple 10 : Préparation d'un catalyseur **C10** (non conforme) et d'un catalyseur **C10'** (conforme)

Le catalyseur **C10'** est préparé conformément à ladite étape i3) suivie d'une étape de séchage ii) et d'une étape de calcination iii) selon le procédé de l'invention.

L'alumine utilisée dans l'exemple 1 est utilisée en tant que support du catalyseur C10'. La préparation du catalyseur C10' est réalisée en deux imprégnations successives. Lors de la première imprégnation à sec, la solution d'imprégnation comprend de la β-cyclodextrine (SIGMA-ALDRICH, pureté de 98%), dans un rapport molaire (Co+Mo)/β-cyclodextrine de 30 (sur la base des quantités de métaux qui sont ensuite imprégnés en seconde étape). Elle est suivie d'une maturation de 12 heures et d'un séchage à 120°C pendant 1h. La seconde imprégnation à sec est alors réalisée. Les précurseurs métalliques utilisés pour cette deuxième imprégnation sont l'heptamolybdate d'ammonium, le nitrate de cobalt, et le nitrate de nickel. Le volume de solution correspond au volume de reprise en eau du support alumine modifié par ajout de la β-cyclodextrine (imprégnation à sec). La cible finale correspond à une teneur exprimée en % poids oxyde par rapport au catalyseur sec (après perte au feu à 550°C) : NiO/CoO/$MoO_3$ 1/2,3/15. A l'issue de l'imprégnation des métaux, les extrudés sont laissés à maturation durant une nuit en atmosphère saturée en eau puis placés 2h dans une étuve à 120°C et enfin sont calcinés à 450°C pendant 3h pour donner le catalyseur **C10'** (conforme).

Le catalyseur C10 est préparé d'une manière analogue que C10' à l'exception de la première étape d'imprégnation à sec avec la $\beta$-cyclodextrine qui a été omise. Les étapes de maturation, séchage et calcination sont similaires à celles de la préparation de C10'. On obtient ainsi le précurseur **C10** qui possède les teneurs pondérales suivantes 1/2,3/15 respectivement en $NiO/CoO/MoO_3$.

Exemple 11 : Evaluation des performances catalytiques des catalyseurs C9 et C10 (non conformes) et C9' et C10' (conformes) en test molécule modèle d'hydrogénation du toluène dans le cyclohexane sous pression et en présence d'$H_2S$

Dans les applications telles que l'hydrotraitement des distillats sous vide et des résidus, la fonction hydro-déshydrogénante joue un rôle critique compte tenu de la teneur importante en composés aromatiques et polyaromatiques de ces charges qu'il convient d'hydrogéner. Le test d'hydrogénation du toluène a donc été utilisé pour connaître l'intérêt de catalyseurs destinés à l'hydrotraitement de telles charges lourdes et en vue d'applications telles que le prétraitement du craquage catalytique. Les catalyseurs C9 et C9', C10 et C10' précédemment décrits sont sulfurés *in situ* en dynamique dans un réacteur tubulaire à lit fixe traversé d'une unité pilote de type Microcat (constructeur : société Vinci), les fluides circulant de haut en bas. Les mesures d'activité hydrogénante sont effectuées immédiatement après la sulfuration sous pression et sans remise à l'air avec la charge d'hydrocarbures qui a servi à sulfurer les catalyseurs.

La charge de sulfuration et de test est composée de 5,88 % de diméthyldisulfure (DMDS), 20 % de toluène et 74,12 % de cyclohexane (en poids).

La sulfuration est effectuée de température ambiante jusqu'à 350°C, avec une rampe de température de 2°C/min, une VVH = $4h^{-1}$ et $H_2/HC$ = 450 Nl/l. Le test catalytique est effectué à 350°C à VVH = $2h^{-1}$ et $H_2/HC$ équivalent à celui de la sulfuration, avec prélèvement au minimum de 4 effluents qui sont analysées par chromatographie en phase gazeuse.

On mesure ainsi les activités catalytiques stabilisées de volumes égaux des catalyseurs C9 et C9', C10 et C10' dans la réaction d'hydrogénation du toluène.

Les conditions détaillées de mesure d'activité sont les suivantes :

- Pression totale : 6,0 MPa
- Pression de toluène : 0,37 MPa
- Pression de cyclohexane : 1,42 MPa
- Pression de méthane 0,22 MPa
- Pression d'hydrogène : 3,68 MPa
- Pression d'$H_2S$ : 0,22 MPa
- Volume de catalyseur : 4 $cm^3$ (extrudés de longueur comprise entre 2 et 4 mm)
- Vitesse spatiale horaire : 2 $h^{-1}$
- Température de sulfuration et de test : 350 °C

Pour chacun des tests, des prélèvements de l'effluent liquide sont analysés par chromatographie en phase gazeuse. La détermination des concentrations molaires en toluène non converti (T) et des concentrations en produits d'hydrogénation (le méthylcyclohexane (MCC6), l'éthylcyclopentane (EtCC5) et les diméthylcyclopentanes (DMCC5)) permettent de calculer un taux d'hydrogénation de toluène $X_{HYD}$ défini par :

$$X_{HYD}(\%) = 100 \times \frac{MCC6 + EtCC5 + DMCC5}{T + MCC6 + EtCC5 + DMCC5}$$

La réaction d'hydrogénation du toluène étant d'ordre 1 dans les conditions de test mises en oeuvre et le réacteur se comportant comme un réacteur piston idéal, on calcule l'activité hydrogénante AHYD des catalyseurs C9 et C9', C10 et C10' en appliquant la formule:

$$A_{HYD} = \ln\left(\frac{100}{100 - X_{HYD}}\right)$$

Le tableau 4 ci-dessous permet de comparer les activités hydrogénantes relatives des catalyseurs C9 et C9', C10 et C10'.

Tableau 4 : Activité relative par rapport au catalyseur C9 (non conforme) en hydrogénation du toluène des catalyseurs C9', C10 et C10'

| Catalyseur | $A_{HYD}$ relative par rapport à C9 (%) |
|---|---|
| C9 (comp.) | 100 |
| C9' (inv.) | 117 |
| C10 (comp.) | 84 |
| C10'(inv.) | 107 |

Les résultats figurant dans le tableau 4 démontrent que les performances catalytiques, en terme d'activité hydrogénante, du catalyseur C9' et du catalyseur C10' préparés en présence d'un oligosaccharide cyclique sont sensiblement améliorées par rapport à celles obtenues respectivement avec le catalyseur C9 et le catalyseur C10.

Ce gain d'activité hydrogénante est particulièrement avantageux pour l'hydrotraitement de charges hydrocarbonées lourdes, par exemple pour l'hydrodésulfuration des résidus ou en prétraitement du craquage catalytique.

## Revendications

**1.** Procédé de préparation d'un catalyseur comprenant au moins un métal du groupe VIII, au moins un métal du groupe VIB et au moins un support formé d'au moins un oxyde, ledit procédé comprenant successivement au moins :

i) au moins l'une des étapes choisies parmi :

i1) au moins une étape de mise en contact d'au moins un précatalyseur comprenant au moins ledit métal du groupe VIII, au moins ledit métal du groupe VIB et au moins ledit support avec au moins un composé organique formé d'au moins un oligosaccharide cyclique composé d'au moins 6 sous-unités glucopyranose liées en $\alpha$-(1,4),
i2) au moins une étape de mise en contact d'au moins dudit support avec au moins une solution contenant au moins un précurseur d'au moins dudit métal du groupe VIII, au moins un précurseur d'au moins dudit métal du groupe VIB et au moins un composé organique formé d'au moins un oligosaccharide cyclique composé d'au moins 6 sous-unités glucopyranose liées en $\alpha$-(1,4), et
i3) au moins une première étape de mise en contact d'au moins dudit support avec au moins un composé organique formé d'au moins un oligosaccharide cyclique composé d'au moins 6 sous-unités glucopyranose liées en $\alpha$-(1,4) suivie d'au moins une deuxième étape de mise en contact du solide issu de ladite première étape avec au moins un précurseur d'au moins dudit métal du groupe VIII et au moins un précurseur d'au moins dudit métal du groupe VIB ;

ii) au moins une étape de séchage, et
iii) au moins une étape de traitement thermique pour décomposer ledit composé organique.

**2.** Procédé de préparation selon la revendication 1 tel que ledit catalyseur comprend du phosphore.

**3.** Procédé de préparation selon la revendication 1 ou la revendication 2 tel que ledit catalyseur comprend un dopant choisi parmi le bore et le fluor, pris seul ou en mélange.

**4.** Procédé de préparation selon l'une des revendications 1 à 3 tel que ledit métal du groupe VIB est choisi parmi le molybdène, le tungstène et le mélange de ces deux éléments.

**5.** Procédé de préparation selon l'une des revendications 1 à 4 tel que ledit métal du groupe VIII est choisi parmi le cobalt, le nickel et le mélange de ces deux éléments.

**6.** Procédé de préparation selon l'une des revendications 1 à 5 tel que ledit support est formé d'au moins un oxyde comprenant au moins 50% poids d'alumine.

**7.** Procédé de préparation selon l'une des revendications 1 à 6 tel que ledit composé organique est choisi parmi les

cyclodextrines, les cyclodextrines substituées, les cyclodextrines polymérisées et les mélanges de cyclodextrines.

**8.** Procédé de préparation selon la revendication 7 tel que les cyclodextrines sont l'$\alpha$-cyclodextrine, la $\beta$-cyclodextrine et la $\gamma$-cyclodextrine respectivement composée de 6, 7 et 8 sous-unités glucopyranose liées en $\alpha$-(1,4).

**9.** Procédé de préparation selon la revendication 7 tel que les cyclodextrines substituées sont l'hydroxypropyl bêta-cyclodextrine et les bêta-cyclodextrines méthylées.

**10.** Procédé de préparation selon l'une des revendications 1 à 9 tel que l'introduction dudit composé organique, pour la mise en oeuvre de ladite étape i) est telle que le rapport molaire {(métaux des groupes (VIII+VIB) sous forme d'oxyde présent dans phase active du catalyseur obtenu à l'issue de ladite étape iii)/composé organique} est compris entre 10 et 300.

**11.** Procédé de préparation selon l'une des revendications 1 à 10 tel qu'il comprend au moins une étape de sulfuration iv) effectuée après la mise en oeuvre de ladite étape iii).

**12.** Procédé d'hydrotraitement d'une charge hydrocarbonée ayant un point d'ébullition supérieur ou égal à 250°C et comprenant au moins un hétéroatome, ledit procédé d'hydrotraitement comprenant la mise en contact de ladite charge hydrocarbonée avec au moins un catalyseur sulfuré obtenu selon le procédé de préparation selon la revendication 11.

**13.** Procédé d'hydrotraitement selon la revendication 12 tel qu'il est réalisé en présence d'hydrogène et est mis en oeuvre dans les conditions opératoires suivantes : la température est comprise entre 180 et 450 °C, la pression totale est comprise entre 0,5 et 30 MPa, la vitesse volumique horaire est comprise entre 0,1 et 20 $h^{-1}$, et le rapport hydrogène/charge exprimé en volume d'hydrogène, mesuré dans les conditions normales de température et pression, par volume de charge liquide est compris entre 50 Nl/l à 2 000 Nl/l.

**14.** Procédé d'hydrotraitement selon la revendication 12 ou la revendication 13 tel qu'il réalise l'hydrodésulfuration d'une coupe gazole contenant de 0,04 à 5% poids de soufre.

**15.** Procédé d'hydrotraitement selon la revendication 12 ou la revendication 13 tel que ladite charge hydrocarbonée est une charge hydrocarbonée lourde ayant un point d'ébullition supérieur ou égal à 370°C.

## Patentansprüche

**1.** Verfahren zur Herstellung eines Katalysators, umfassend mindestens ein Metall der Gruppe VIII, mindestens ein Metall der Gruppe VIB und mindestens einen Träger, bestehend aus mindestens einem Oxid, wobei das Verfahren nacheinander mindestens Folgendes umfasst:

i) mindestens einen der Schritte, der aus Folgendem ausgewählt ist:

i1) mindestens einen Schritt des Inkontaktbringens von mindestens einem Vorkatalysator, umfassend mindestens das Metall der Gruppe VIII, mindestens das Metall der Gruppe VIB und mindestens den Träger mit mindestens einer organischen Verbindung, bestehend aus mindestens einem cyclischen Oligosaccharid, das aus mindestens 6 Glucopyranose-Untereinheiten in $\alpha$-Konfiguration (1,4) zusammengesetzt ist,
i2) mindestens einen Schritt des Inkontaktbringens von mindestens dem Träger mit mindestens einer Lösung, die mindestens einen Vorläufer von mindestens dem Metall der Gruppe VIII, mindestens einen Vorläufer von mindestens dem Metall der Gruppe VIB und mindestens eine organische Verbindung enthält, bestehend aus mindestens einem cyclischen Oligosaccharid, das aus mindestens 6 Glucopyranose-Untereinheiten in $\alpha$-Konfiguration (1,4) zusammengesetzt ist, und
i3) mindestens einen ersten Schritt des Inkontaktbringens mindestens des Trägers mit mindestens einer organischen Verbindung, bestehend aus mindestens einem cyclischen Oligosaccharid, das aus mindestens 6 Glucopyranose-Untereinheiten in $\alpha$-Konfiguration (1,4) zusammengesetzt ist, gefolgt von mindestens einem zweiten Schritt des Inkontaktbringens des Feststoffs, der aus dem ersten Schritt hervorgegangen ist, mit mindestens einem Vorläufer von mindestens dem Metall der Gruppe VIII und mindestens einem Vorläufer von mindestens dem Metall der Gruppe VIB;

ii) mindestens einen Schritt des Trocknens und
iii) mindestens einen Schritt der Wärmebehandlung zum Zersetzen der organischen Verbindung.

**2.** Herstellungsverfahren nach Anspruch 1, wobei der Katalysator Phosphor umfasst.

**3.** Herstellungsverfahren nach Anspruch 1 oder 2, wobei der Katalysator ein Dotierungsmittel umfasst, das aus Bor und Fluor, einzeln oder in Mischung verwendet, ausgesucht ist.

**4.** Herstellungsverfahren nach einem der Ansprüche 1 bis 3, wobei das Metall der Gruppe VIB aus Molybdän, Wolfram und der Mischung dieser beiden Elemente ausgewählt ist.

**5.** Herstellungsverfahren nach einem der Ansprüche 1 bis 4, wobei das Metall der Gruppe VIII aus Kobalt, Nickel und der Mischung dieser beiden Elemente ausgewählt ist.

**6.** Herstellungsverfahren nach einem der Ansprüche 1 bis 5, wobei der Träger aus mindestens einem Oxid, das mindestens 50 Gew.% Aluminium umfasst, gebildet ist.

**7.** Herstellungsverfahren nach einem der Ansprüche 1 bis 6, wobei die organische Verbindung aus Cyclodextrinen, substituierten Cyclodextrinen, polymerisierten Cyclodextrinen und Mischungen von Cyclodextrinen ausgewählt ist.

**8.** Herstellungsverfahren nach Anspruch 7, wobei die Cyclodextrine $\alpha$-Cyclodextrin, $\beta$-Cyclodextrin und $\gamma$-Cyclodextrin sind, jeweils bestehend aus 6, 7 und 8 verbunden Glucopyranose-Untereinheiten, die in $\alpha$-Konfiguration (1,4) zusammengesetzt sind.

**9.** Herstellungsverfahren nach Anspruch 7, wobei die substituierten Cyclodextrine Hydroxypropyl-$\beta$-Cyclodextrin und methylierte beta-Cyclodextrine sind.

**10.** Herstellungsverfahren nach einem der Ansprüche 1 bis 9, wobei die Einführung der organischen Verbindung für die Umsetzung des Schrittes i) derart ist, dass das Molverhältnis {(Metalle der Gruppen (VIII + VIB) in Form von Oxid, das in der aktiven Phase des Katalysators vorhanden ist, der nach Abschluss des Schrittes iii erhalten ist)/organische Verbindung} zwischen 10 und 300 beträgt.

**11.** Herstellungsverfahren nach einem der Ansprüche 1 bis 10, umfassend mindestens einen Schritt des Sulfidierens iv), der nach der Umsetzung des Schrittes iii) durchgeführt wird.

**12.** Verfahren zur Wasserstoffbehandlung einer Kohlenwasserstoffbeschickung, die einen Siedepunkt von über oder gleich 250 °C aufweist und mindestens ein Heteroatom umfasst, wobei die Wasserstoffbehandlung das Inkontaktbringen der Kohlenwasserstoffbeschickung mit mindestens einem Sulfidkatalysator umfasst, der nach dem Herstellungsverfahren nach Anspruch 11 erhalten ist.

**13.** Verfahren zur Wasserstoffbehandlung nach Anspruch 12, wobei es in Gegenwart von Wasserstoff durchgeführt und unter den folgenden Betriebsbedingungen umgesetzt wird: die Temperatur beträgt zwischen 180 und 450 °C, der Gesamtdruck beträgt zwischen 0,5 und 30 MPa, die Volumengeschwindigkeit pro Stunde beträgt zwischen 0,1 und 20 $h^{-1}$ und das Verhältnis Wasserstoff/Beschickung, ausgedrückt in Wasserstoffvolumen, gemessen unter den normalen Temperatur- und Druckbedingungen, pro Volumen der flüssigen Beschickung beträgt zwischen 50 Nl/l und 2000 Nl/l.

**14.** Verfahren zur Wasserstoffbehandlung nach Anspruch 12 oder 13, wobei es die Hydrodesulfurierung eines Kraftstoffzuschnitts durchführt, der von 0,04 bis 5 Gew.% Schwefel enthält.

**15.** Verfahren zur Wasserstoffbehandlung nach Anspruch 12 oder 13, wobei die Kohlenwasserstoffbeschickung eine schwere Kohlenwasserstoffbeschickung ist, die einem Siedepunkt von größer oder gleich 370 °C aufweist.

## Claims

**1.** A process for preparing a catalyst comprising at least one metal from group VIII, at least one metal from group VIB and at least one support formed from at least one oxide, said process comprising, in succession, at least:

i) at least one of the steps selected from:

i1) at least one step for bringing at least one pre-catalyst comprising at least said metal from group VIII, at least said metal from group VIB and at least said support into contact with at least one organic compound formed from at least one cyclic oligosaccharide composed of at least 6 $\alpha$-(1,4)-bonded glucopyranose subunits;
i2) at least one step for bringing at least said support into contact with at least one solution containing at least one precursor of at least said metal from group VIII, at least one precursor of at least said metal from group VIB and at least one organic compound formed from at least one cyclic oligosaccharide composed of at least 6 $\alpha$-(1,4)-bonded glucopyranose subunits; and
i3) at least one first step for bringing at least said support into contact with at least one organic compound formed from at least one cyclic oligosaccharide composed of at least 6 $\alpha$-(1,4)-bonded glucopyranose subunits followed by at least one second step for bringing the solid derived from said first step into contact with at least one precursor of at least said metal from group VIII and at least one precursor of at least said metal from group VIB;

ii) at least one drying step; and
iii) at least one heat treatment step to decompose said organic compound.

**2.** A preparation process according to claim 1, in which said catalyst comprises phosphorus.

**3.** A preparation process according to claim 1 or claim 2, in which said catalyst comprises a dopant selected from boron and fluorine, used alone or as a mixture.

**4.** A preparation process according to one of claims 1 to 3, in which said metal from group VIB is selected from molybdenum, tungsten and a mixture of said two elements.

**5.** A preparation process according to one of claims 1 to 4, in which said metal from group VIII is selected from cobalt, nickel and a mixture of said two elements.

**6.** A preparation process according to one of claims 1 to 5, in which said support is formed from at least one oxide comprising at least 50% by weight of alumina.

**7.** A preparation process according to one of claims 1 to 6, in which said organic compound is selected from cyclodextrins, substituted cyclodextrins, polymerized cyclodextrins and mixtures of cyclodextrins.

**8.** A preparation process according to claim 7, in which the cyclodextrins are $\alpha$-cyclodextrin, $\beta$-cyclodextrin and y-cyclodextrin respectively composed of 6, 7 and 8 $\alpha$-(1,4)-bonded glucopyranose subunits.

**9.** A preparation process according to claim 7, in which the substituted cyclodextrins are hydroxypropyl beta-cyclodextrin and methylated beta-cyclodextrins.

**10.** A preparation process according to one of claims 1 to 9, in which said organic compound for carrying out said step i) is introduced such that the molar ratio {(metals from groups (VIII+VIB) in the oxide form present in the active phase of the catalyst obtained from said step iii)/organic compound} is in the range 10 to 300.

**11.** A preparation process according to one of claims 1 to 10, comprising at least one sulphurization step iv) carried out after carrying out said step iii).

**12.** A process for the hydrotreatment of a hydrocarbon feed with a boiling point of 250°C or more and comprising at least one heteroatom, said hydrotreatment process comprising bringing said hydrocarbon feed into contact with at least one sulphurized catalyst obtained in accordance with the preparation process according to claim 11.

**13.** A hydrotreatment process according to claim 12, carried out in the presence of hydrogen and under the following operating conditions: the temperature is in the range 180°C to 450°C, the total pressure is in the range 0.5 to 30 MPa, the hourly space velocity is in the range 0.1 to 20 h-1 and the hydrogen/feed ratio, expressed as the volume of hydrogen measured under normal temperature and pressure conditions per volume of liquid feed is in the range 50 Nl/l to 2000 Nl/l.

14. A hydrotreatment process according to claim 12 or claim 13, in which hydrodesulphurization of a gas oil containing 0.04% to 5% by weight of sulphur is carried out.

15. A hydrotreatment process according to claim 12 or claim 13, in which said hydrocarbon feed is a heavy hydrocarbon feed with a boiling point of 370°C or more.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9641848 A
- WO 0176741 A
- US 4012340 A
- US 3954673 A
- EP 466568 A
- EP 1046424 A
- EP 0601722 A1
- WO 2007070394 A


### Littérature non-brevet citée dans la description


- *Journal Officiel de l'Union européenne,* 22 Mars 2003, vol. L76, L76, , 10-L76, 19
- **B. S CLAUSEN ; H. T. TOPSØE ; F.E. MASSOTH.** Catalysis Science and Technology. Springer-Verlag, 1996, vol. 11
- **H. TOPSØE ; B.S. CLAUSEN.** *Applied Catalysis,* 1986, vol. 25, 273
- **X. CARRIER ; J.F. LAMBERT ; M. CHE.** *J.A.C.S.,* 1997
- *JACS,* vol. 119 (42), 10137